# EUROPEAN PATENT APPLICATION

(11) **EP 4 546 259 A1**
(43) Date of publication of application: **30.04.2025**
(21) Application number: 23826994.8
(22) Date of filing: 08.06.2023
(51) Int. Cl.: G06T 7/11, H04L 9/32

(54) **IMAGE PROCESSING DEVICE AND METHOD**

(30) Priority: 21.06.2022 JP 2022099578
(71) Applicant: Sony Group Corporation, Tokyo 108-0075 (JP)
(72) Inventor: KANAZAWA Yuya, Tokyo 108-0075 (JP); HIRATSUKA Yosuke, Tokyo 108-0075 (JP)
(74) Representative: D Young & Co LLP
(86) International application number: PCT/JP2023/021290
(87) International publication number: WO 2023/248807

(57) **Abstract**

The present disclosure relates to an image processing apparatus and method capable of more accurately determining authenticity of an image.

A partial region is generated by dividing an entire region of an image, and estimated 3D information is compared with sensor 3D information with use of the partial region. The estimated 3D information is 3D information estimated on the basis of the image, and the sensor 3D information is 3D information acquired by a sensor and associated with the image. The present disclosure can be applied to, for example, an image processing apparatus, an information processing apparatus, an electronic device, an image processing method, an information processing method, a program, an information processing system, and the like.

## Description

### TECHNICAL FIELD

The present disclosure relates to an image processing apparatus and method, and more particularly, to an image processing apparatus and method capable of more accurately determining authenticity of an image.

### BACKGROUND ART

Conventionally, a method has been proposed in which a captured image or the like is converted into a hash value in a digital camera or the like, and an electronic signature using the hash value is added to the captured image to be used for detection of falsification of the captured image. However, in this method, it has been unable to detect a false image generated by so-called trick shooting or the like.

Therefore, a method of detecting a false image on the basis of consistency between information indicating a focal length at the time of imaging and a focal length obtained from a captured image has been considered (see, for example, Patent Document 1). Furthermore, a method of detecting a false image by determining whether or not a subject of a captured image is a plane on the basis of multi-point distance measurement data of a camera has been considered (see, for example, Patent Document 2).

### CITATION LIST

### PATENT DOCUMENT

Patent Document 1: International Publication No. 2020/246166
Patent Document 2: Japanese Patent Application Laid-Open No. 2002-198958

### SUMMARY OF THE INVENTION

### PROBLEMS TO BE SOLVED BY THE INVENTION

However, in the method described in Patent Document 1, only the consistency of the focal length is determined, and the consistency of unevenness or the like of the subject has been unable to be confirmed. Furthermore, in the method described in Patent Document 2, only whether or not the subject is a plane is determined, and it has been unable to confirm detailed consistency between distance measurement data and unevenness or the like of the subject.

The present disclosure has been made in view of such a situation, and an object thereof is to enable more accurate determination of authenticity of an image.

### SOLUTIONS TO PROBLEMS

An image processing apparatus according to one aspect of the present technology is an image processing apparatus including: a region division unit configured to generate a partial region by dividing an entire region of an image; and a comparison unit configured to compare estimated 3D information with sensor 3D information with use of the partial region, in which the estimated 3D information is 3D information estimated on the basis of the image, and the sensor 3D information is 3D information acquired by a sensor and associated with the image.

An image processing method according to one aspect of the present technology is an image processing method including: generating a partial region by dividing an entire region of an image; and comparing estimated 3D information with sensor 3D information with use of the partial region, in which the estimated 3D information is 3D information estimated on the basis of the image, and the sensor 3D information is 3D information acquired by a sensor and associated with the image.

In the image processing apparatus and method according to one aspect of the present technology, a partial region is generated by dividing an entire region of an image, and estimated 3D information is compared with sensor 3D information with use of the partial region. The estimated 3D information is 3D information estimated on the basis of the image. Furthermore, the sensor 3D information is 3D information acquired by a sensor and associated with the image.

### BRIEF DESCRIPTION OF DRAWINGS

Fig. 1 is a diagram illustrating a main configuration example of an authenticity determination device.
Fig. 2 is a diagram illustrating a main configuration example of an image file.
Fig. 3 is a diagram illustrating an example of a main image.
Fig. 4 is a diagram illustrating an example of estimated 3D information.
Fig. 5 is a diagram illustrating an example of a state of region division.
Fig. 6 is a diagram illustrating an example of a state of region division.
Fig. 7 is a diagram illustrating an example of sensor 3D information.
Fig. 8 is a diagram illustrating an example of presentation information.
Fig. 9 is a diagram illustrating an example of presentation information.
Fig. 10 is a flowchart illustrating an example of a flow of authenticity determination processing.
Fig. 11 is a flowchart illustrating an example of a flow of the authenticity determination processing.
Fig. 12 is a flowchart illustrating an example of a flow of the authenticity determination processing.
Fig. 13 is a flowchart illustrating an example of a flow of the authenticity determination processing.
Fig. 14 is a flowchart illustrating an example of a flow of the authenticity determination processing.
Fig. 15 is a flowchart illustrating an example of a flow of the authenticity determination processing.
Fig. 16 is a flowchart illustrating an example of a flow of the authenticity determination processing.
Fig. 17 is a diagram for explaining a case where an authenticity determination target is a processed image.
Fig. 18 is a flowchart illustrating an example of a flow of the authenticity determination processing.
Fig. 19 is a diagram illustrating an example of presentation information.
Fig. 20 is a diagram illustrating an example of a reduced image.
Fig. 21 is a flowchart illustrating an example of a flow of the authenticity determination processing.
Fig. 22 is a block diagram illustrating a main configuration example of an image processing system.
Fig. 23 is a block diagram illustrating a main configuration example of a computer.

### MODE FOR CARRYING OUT THE INVENTION

Modes for carrying out the present disclosure (hereinafter, referred to as embodiments) will be described below. Note that the description is given in the following order.
1. Determination of authenticity of image
2. Determination of authenticity of image with use of partial region
3. Determination of authenticity of processed image
4. Determination of authenticity of moving image
5. Embodiment (image processing system)
6. Supplementary Note

### <1. Determination of authenticity of image>

Conventionally, a method has been proposed in which a captured image or the like is converted into a hash value in a digital camera or the like, and an electronic signature using the hash value is added to the captured image to be used for detection of falsification of the captured image. However, in order to ensure authenticity of an image (whether or not the image is a correct image), it is necessary to check not only whether or not the image is falsified but also whether or not there has been fraud at the time of creation. In the above-described method, it has been unable to detect fraud at the time of creation (for example, a false image generated by so-called trick shooting or the like). The false image is a captured image in which a non-existent situation appears to exist, that is, a captured image of a non-existent situation that looks like a captured image obtained by capturing a real situation. Trick shooting refers to a shooting technique of generating a false image by using a tool, devising shooting, or the like.

Therefore, for example, as described in Patent Document 1, a method of detecting a false image on the basis of consistency between information indicating a focal length at the time of imaging and a focal length obtained from a captured image has been considered. Furthermore, for example, as described in Patent Document 2, a method of detecting a false image by determining whether or not a subject of a captured image is a plane on the basis of multi-point distance measurement data of a camera has been considered.

However, in these methods, there has been a possibility that detection of a false image becomes inaccurate. For example, in the method described in Patent Document 1, only the consistency of the focal length is determined, and consistency of unevenness or the like of the subject has been unable to be confirmed. Therefore, for example, even in the case of a false image that is generated by capturing a face photograph or the like and pretends as if the subject of the photograph is captured, it has been difficult to detect the false image by the method described in Patent Document 1, if the focal length matches the metadata.

Furthermore, Patent Document 2 does not specifically describe how to detect a contradiction between an image and distance measurement data, and only has described that whether or not a subject is a plane is determined. Therefore, in this method, it has been unable to confirm detailed consistency between distance measurement data and unevenness of the subject or the like. For example, by capturing an image of a person as a main subject in front of a flat panel on which a background is drawn, it is possible to generate a false image as if the person is present at a place drawn on the flat panel. Then, in the case of such trick shooting, distance measurement data that is not a plane (distance measurement data in which at least a portion of a person is not a plane) can be generated. In the method described in Patent Document 2, it has been difficult to detect such trick shooting.

As described above, there has been room for improvement in accuracy of image authenticity determination.

### <2. Determination of authenticity of image with use of partial region>

Therefore, at a time of determining authenticity of an image, the inside of the image is divided into a plurality of partial regions, and 3D information (depth) of the partial regions is compared. Note that, in the following, the 3D information indicates information indicating a distance (depth) from an imaging position to a position of a subject (an object in an image frame). This 3D information includes distance information (information indicating a distance from an imaging position to a body position) for every pixel in a frame or for every small region including a plurality of pixels. Note that the 3D information may be any information as long as information allowing derivation of the distance is included. That is, the 3D information may directly indicate this distance, for example, a length or the like. Furthermore, the 3D information may indirectly indicate this distance, for example, a phase, coordinates, or the like.

For example, the image processing apparatus may include a region division unit configured to generate a partial region by dividing an entire region of an image, and a comparison unit configured to compare estimated 3D information with sensor 3D information with use of the partial region. Furthermore, in the image processing method, a partial region may be generated by dividing an entire region of an image, and estimated 3D information may be compared with sensor 3D information with use of the partial region. Note that the estimated 3D information is 3D information estimated on the basis of the image. Furthermore, the sensor 3D information is 3D information acquired by a sensor and associated with the image. Note that the generation of the partial region may be extracting an image of the partial region from the entire region of the image, or may be specifying an address of a pixel in a frame at a boundary of the partial region (that is, extraction is enabled). Furthermore, in the following, a "partial region" indicates not only (a range of) the partial region but also an image in the partial region in some cases.

Since the image and the 3D information can be compared in more detail with use of the partial region in this manner, the authenticity of the image can be more accurately determined on the basis of a comparison result.

### <Authenticity determination device>

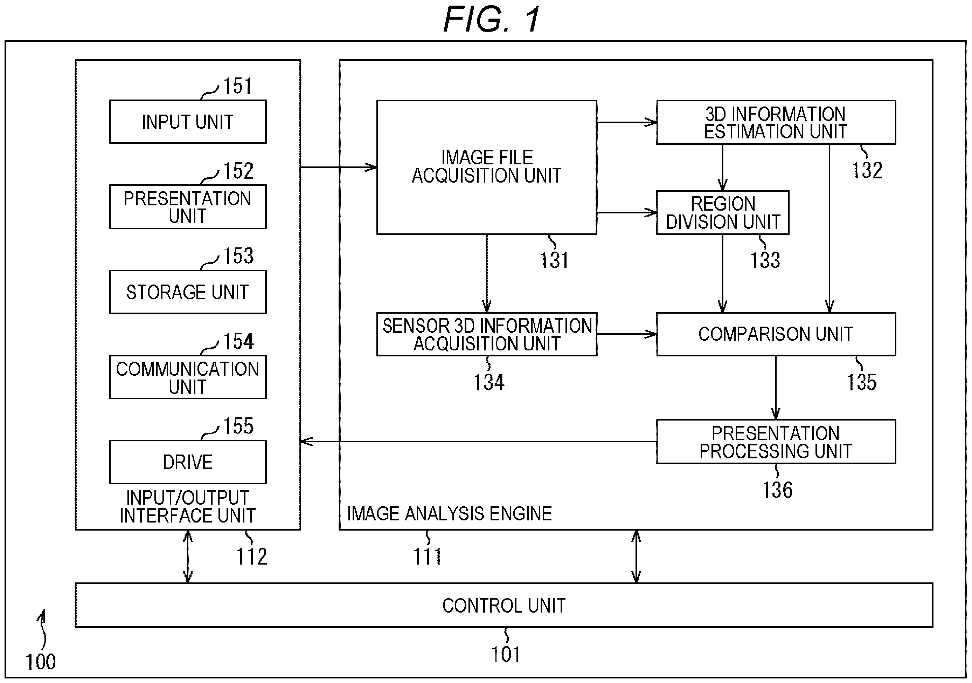

Fig. 1 is a block diagram illustrating an example of a configuration of an authenticity determination device, which is an aspect of an image processing apparatus to which the present technology is applied. An authenticity determination device 100 illustrated in Fig. 1 is a device that determines authenticity of an image (captured image). Note that, in Fig. 1, main parts of processing units, data flows, and the like are illustrated, and those illustrated in Fig. 1 are not necessarily all. That is, the authenticity determination device 100 may include a device or a processing unit not illustrated as a block in Fig. 1. Furthermore, there may be a flow of data or processing that is not illustrated as an arrow or the like in Fig. 1.

As illustrated in Fig. 1, the authenticity determination device 100 includes a control unit 101, an image analysis engine 111, and an input/output interface unit 112.

The control unit 101 controls the image analysis engine 111 and the input/output interface unit 112.

The image analysis engine 111 includes an image file acquisition unit 131, a 3D information estimation unit 132, a region division unit 133, a sensor 3D information acquisition unit 134, a comparison unit 135, and a presentation processing unit 136. The input/output interface unit 112 includes an input unit 151, a presentation unit 152, a storage unit 153, a communication unit 154, and a drive 155.

The image file acquisition unit 131 performs processing related to acquisition of an image file. The image file is a file container that stores image data. Hereinafter, the image data is also simply referred to as an image.

For example, the image file acquisition unit 131 may acquire an image file including an image to be an authenticity determination target, via the input/output interface unit 112. For example, the image file acquisition unit 131 may read and acquire an image file stored in the storage unit 153. For example, the image file acquisition unit 131 may request the storage unit 153 for an image file that stores an image for which authenticity is to be determined, to acquire the image file. Furthermore, the image file acquisition unit 131 may acquire an image file supplied from another device via the communication unit 154. For example, the image file acquisition unit 131 may request another device for an image file storing an image for which authenticity is to be determined via the communication unit 154, to acquire the image file. Furthermore, the image file acquisition unit 131 may read and acquire an image file recorded on a removable recording medium (not illustrated) mounted to the drive 155. For example, the image file acquisition unit 131 may request the drive 155 for an image file storing an image for which authenticity is to be determined, and cause the drive 155 to read the image file from a removable recording medium to acquire the image file.

The image file acquisition unit 131 may include a storage medium, and cause the storage medium to store (hold) the acquired image file. Note that the storage medium may be of any type. For example, the storage medium may be a magnetic recording medium such as a hard disk or a semiconductor memory such as a random access memory (RAM).

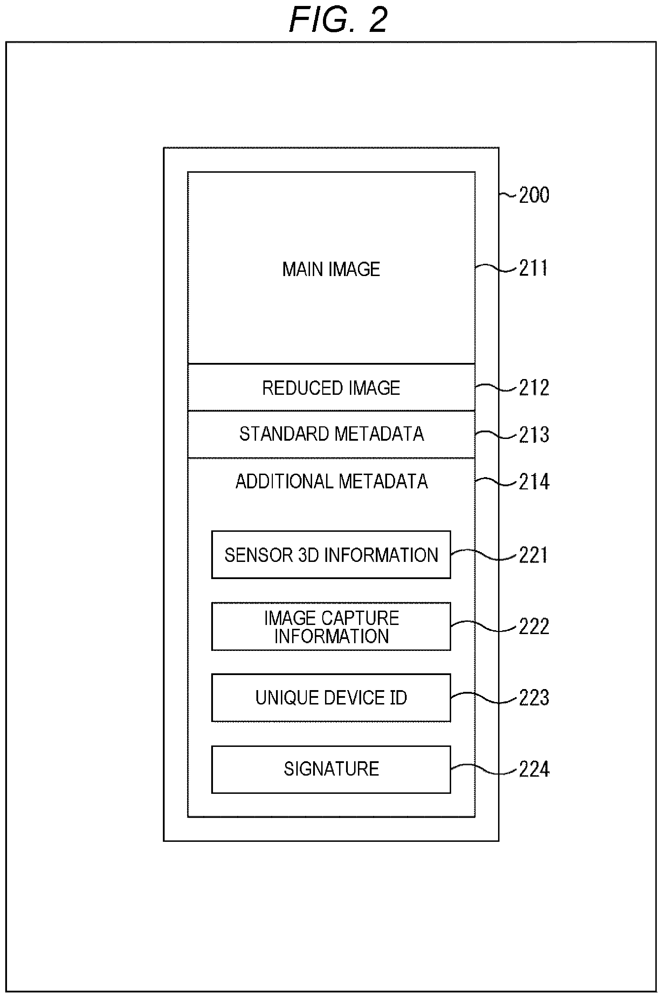

Fig. 2 is a diagram illustrating a main configuration example of the image file. An image file 200 illustrated in Fig. 2 stores a main image 211 and a reduced image 212. The main image 211 may be a compression coded image such as, for example, a joint photographic experts group (JPEG) image, may be a non-compression coded image such as, for example, a RAW image or a YUV image, or may be both of them. The reduced image 212 may be an image (for example, JPEG image) obtained by compressing and encoding a YUV image reduced by resizing processing, may be a reduced YUV image, or may be both of them.

Furthermore, in the image file 200, standard metadata 213 and additional metadata 214 are stored as metadata. The standard metadata 213 includes, for example, items defined by a standard or the like. The additional metadata 214 includes items that are not included in the standard metadata 213, such as items set by a manufacturer.

For example, the additional metadata 214 may include sensor 3D information 221, image capture information 222, unique device ID 223, and a signature 224. The sensor 3D information 221 includes 3D information on an object (subject or the like) in an image frame of the main image 211, and is 3D information corresponding to the main image 211. The sensor 3D information 221 is detected by a sensor and is associated with the main image 211. The sensor may be any sensor such as, for example, a distance measurement sensor as long as 3D information can be detected (generated), and a detection method thereof may be freely determined. For example, the sensor may acquire the sensor 3D information 221 from an optical image on the same optical axis as that of the main image 211 acquired by the image sensor. Note that, the optical axis refers to a principal ray passing through the center of a light flux passing through the entire system in the optical system. "Acquiring the sensor 3D information 221 from an optical image on the same optical axis as that of the main image 211" means that the optical axis of the optical image on which the main image 211 is obtained and the optical axis of the optical image on which the sensor 3D information 221 is obtained are the same as each other. For example, in an imaging device, the main image 211 and the sensor 3D information 221 may be acquired from one optical image. Furthermore, in the imaging device, the one optical image may be divided into two optical images (optical images same as each other) by a beam splitter (half mirror) or the like using a prism or the like, the main image 211 may be acquired from one optical image, and the sensor 3D information 221 may be acquired from another optical image. In this manner, the optical axis of the optical image for obtaining the main image 211 and the optical axis of the optical image for obtaining the sensor 3D information 221 are the same as each other. Therefore, with respect to a subject within a range (view angle) of a scene included in the main image 211, it possible to obtain the sensor 3D information 221 of the subject from the same angle as that in the case of the main image 211. That is, "acquiring the sensor 3D information 221 from an optical image on the same optical axis as that of the main image 211" can be said to indicate that, with respect to a subject within a view angle of the main image 211, the sensor 3D information 221 is acquired for the subject from the same angle as that of the case of the main image 211. Note that a range of the sensor 3D information 221 acquired from the optical image may be freely determined. For example, the range of the sensor 3D information 221 may be the same as the view angle of the main image 211, or may be a range including a part or all of the view angle. For example, the sensor 3D information 221 may be obtained from the same angle as in the case of the main image 211 for a plurality of positions within the view angle of the main image 211. The sensor 3D information 221 may be associated with the main image 211 by, for example, a device that generates the image file 200. For example, an imaging device that images a subject and generates the main image 211 may generate the sensor 3D information 221 and associate the sensor 3D information 221 with the main image 211.

The image capture information 222 includes information regarding image capture of a subject. The unique device ID 223 includes a unique ID of a device (such as an imaging device) that has generated the image file 200 (or the main image 211). The signature 224 is an electronic signature corresponding to the main image 211 and the sensor 3D information 221. The signature 224 includes information in which at least a hash value of the main image 211 and the sensor 3D information 221 is encrypted using predetermined key information. The key information may be a secret key corresponding to a device that generates the signature 224, or may be a common key shared with a device that confirms the signature 224 (a method in which the same key is used on the signing side and the confirming side). The signature 224 may be generated by, for example, a device that generates the image file 200. For example, an imaging device that images a subject and generates the main image 211 may generate the signature 224.

Note that, for example, in a case where both a RAW image and a JPEG image are stored as the main image 211 in the image file 200, as the signature 224, a signature of the RAW image may be stored in the image file 200, a signature of the JPEG image may be stored in the image file 200, or signatures of the RAW image and the JPEG image may be stored in the image file 200.

Returning to Fig. 1, the 3D information estimation unit 132 performs processing related to estimation of 3D information regarding the main image. For example, the 3D information estimation unit 132 may acquire the main image stored in the image file held by the image file acquisition unit 131. Furthermore, the 3D information estimation unit 132 may generate estimated 3D information corresponding to the main image. The estimated 3D information is 3D information estimated on the basis of the main image, regarding an object (subject or the like) in a main image (image frame). That is, the 3D information estimation unit 132 may estimate 3D information (depth) of an object (subject or the like) in the main image (image frame) on the basis of the main image.

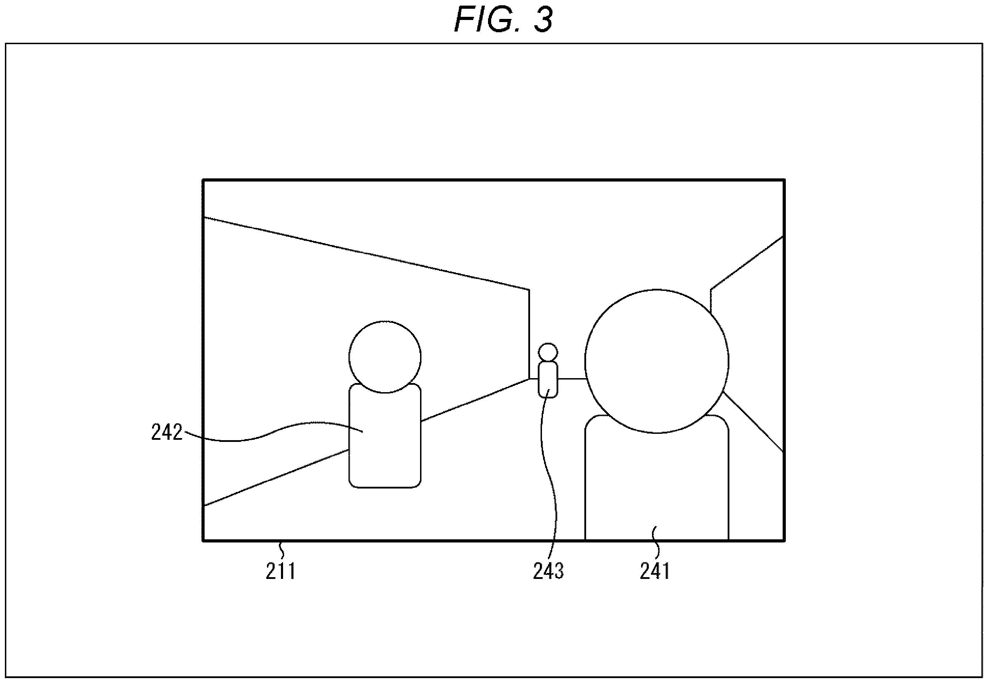

For example, it is assumed that the main image 211 included in the image file 200 of Fig. 2 is an image as in the example illustrated in Fig. 3. In the example of Fig. 3, objects such as a person 241, a person 242, and a person 243 are included (appear) in the main image 211. The person 241 is a main object to be a subject. The person 242 and the person 243 are objects constituting a background.

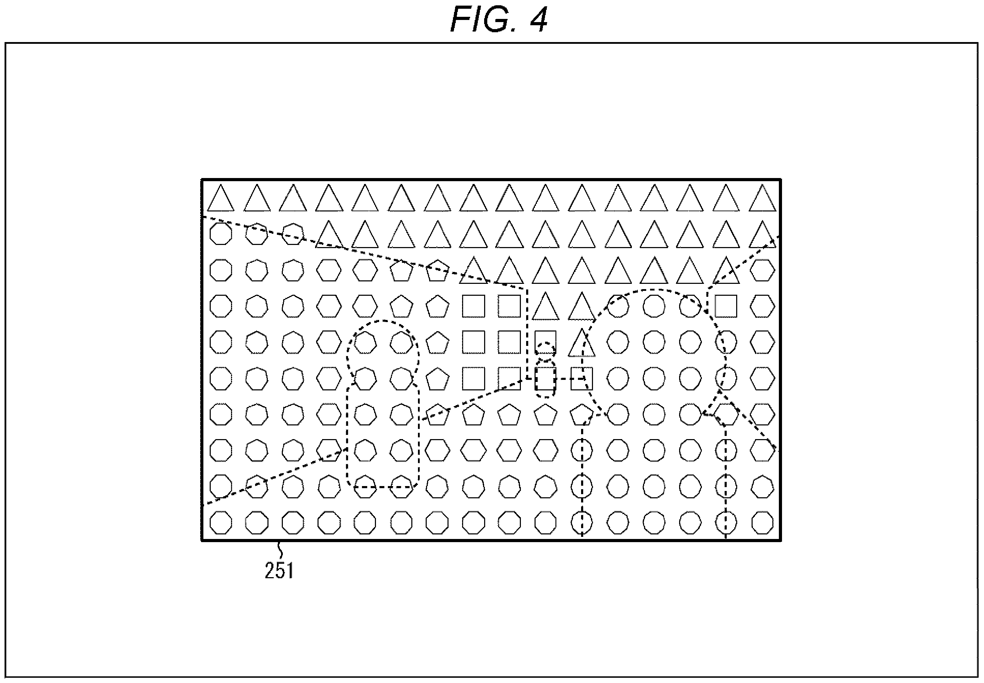

Estimated 3D information 251 illustrated in Fig. 4 indicates an example of the estimated 3D information generated by the 3D information estimation unit 132 and corresponding to the main image 211 of Fig. 3. Each polygon in the estimated 3D information 251 indicates estimated 3D information (distance from an imaging position) in which a position of the polygon in the main image 211 is estimated. Each polygon indicates that, as the number of corners is smaller, an object in a region thereof is farther from the imaging position. In other words, each polygon indicates that, as the number of corners is larger, the object in the region is closer to the imaging position. A resolution of the estimated 3D information 251 may be freely determined, but a higher resolution (for example, the same resolution as that of the main image 211) is desirable unless a data amount, a processing load, and the like are taken into consideration.

As illustrated in the example of Fig. 4, in the estimated 3D information 251, the person 241 is estimated to be located at a place closest to the imaging position (mainly decagons). Furthermore, the person 242 is estimated to be located at a place farther than the person 241 from the imaging position (mainly heptagons), and the person 243 is estimated to be located at a place even farther from the imaging position (mainly quadrangles).

In Fig. 4, a content (picture) of the main image 211 is indicated by a dotted line for the sake of explanation, but this information about the main image 211 may not be included in the actual estimated 3D information 251. That is, the estimated 3D information 251 only needs to include the estimated 3D information of each position indicated by the polygon.

Note that a method of estimating the 3D information by the 3D information estimation unit 132 may be freely determined. For example, the 3D information estimation unit 132 may generate the estimated 3D information corresponding to the main image by inputting the main image to a neural network that is input with an image and outputs estimated 3D information corresponding to the image. The 3D information estimation unit 132 may supply the generated estimated 3D information to the region division unit 133. Furthermore, the 3D information estimation unit 132 may supply the generated estimated 3D information to the comparison unit 135.

The region division unit 133 performs processing related to region division of a main image. For example, the region division unit 133 may generate a partial region by dividing the entire region of the main image. At that time, the region division unit 133 may acquire a main image stored in the image file held by the image file acquisition unit 131, and perform the region division on the basis of the acquired main image.

In this case, a region division method may be freely determined. For example, the region division unit 133 may detect a main object to be a subject in the main image, and divide the entire region of the main image on the basis of a detection result. Furthermore, in that case, the region division unit 133 may generate an object region which is a partial region including the detected object and a non-object region which is a partial region not including the object.

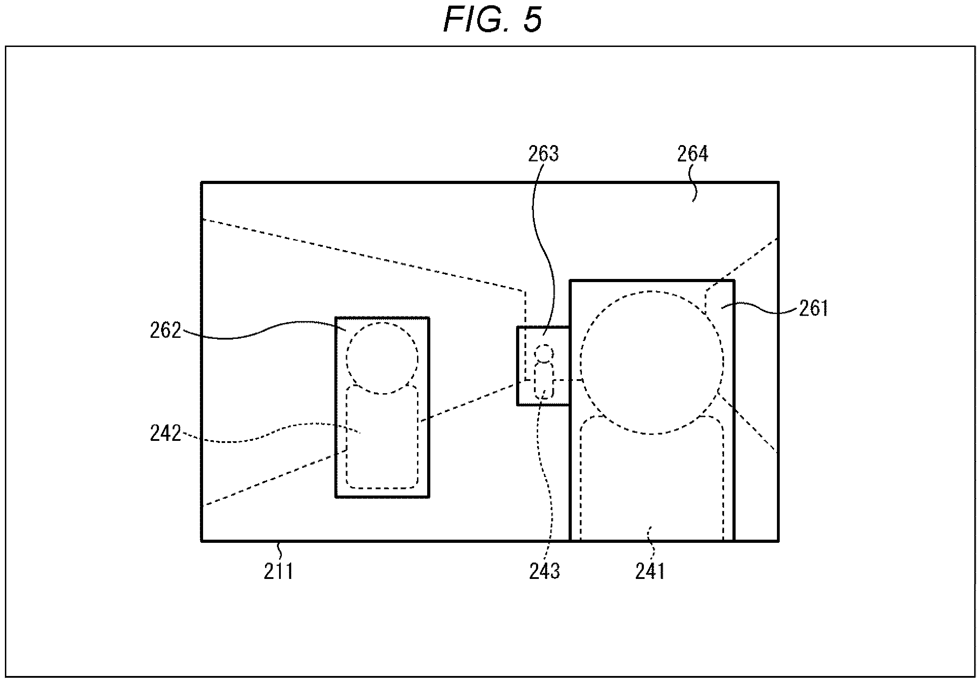

For example, the region division unit 133 may divide the entire region of the main image 211 in the example of Fig. 3 as in the example of Fig. 5. In Fig. 5, a thick line indicates a boundary of a partial region. That is, in the case of the example of Fig. 5, a partial region 261 including the person 241, a partial region 262 including the person 242, a partial region 263 including the person 243, and a partial region 264 other than these are generated. Note that, in Fig. 5, the content (picture) of the main image 211 is indicated by a dotted line.

In the case of this example, the region division unit 133 detects the person 241, the person 242, and the person 243 as objects, and generates a partial region (the partial region 261, the partial region 262, and the partial region 263) including each of the persons and other partial region 264.

At that time, the region division unit 133 may identify a partial region including an object as an object region, and a partial region not including an object as a non-object region. A way of assignment of the object region and the non-object region may be freely determined. The number of partial regions set as the object region may be freely determined. Similarly, the number of partial regions set as the non-object region may also be freely determined.

For example, in the example of Fig. 5, the region division unit 133 may detect the person 241 as a main object to be a subject, set the partial region 261 as an object region, and set other partial regions 262 to 264 as non-object regions. Furthermore, the region division unit 133 may detect the person 241 and the person 242 as main objects to be subjects, set the partial region 261 and the partial region 262 as object regions, and set the partial region 263 and the partial region 264 as non-object regions. Furthermore, the region division unit 133 may detect the persons 241 to 243 as main objects to be subjects, set the partial regions 261 to 263 as object regions, and set the partial region 264 as non-object regions. As a matter of course, there may be other patterns.

Note that a way of setting the partial regions is not limited to the example of Fig. 5.

For example, a shape of the partial region may be freely determined. In the example of Fig. 5, the partial regions 261 to 263 are set to be rectangular, but for example, a boundary of the partial region may be set along an outer shape (contour) of the detected object. For example, a shape of the partial region 261 may be the same as a shape of the person 241. In order to compare the 3D information with use of the partial region, it is preferable to more accurately section the object region and the non-object region, and it is preferable to set the boundary of the partial region along the outer shape (contour) of the detected object. Furthermore, the number of generated partial regions may be freely determined. For example, the entire region of the main image 211 may be divided into two of the partial region 261 and other partial region. Furthermore, a plurality of objects may be included in one partial region. For example, a partial region including all the persons 241 to 243 may be generated. Furthermore, a part or all of a certain partial region may overlap with another partial region.

Furthermore, the region division unit 133 may detect a main object to be a subject by any method. For example, the region division unit 133 may detect the object by performing pattern analysis in the main image. Furthermore, the region division unit 133 may detect this object with use of artificial intelligence (AI). For example, by inputting a main image to a neural network that is input with an image and outputs a detection result of a main object to be a subject in the image, the region division unit 133 may detect the object.

Furthermore, the region division unit 133 may acquire estimated 3D information supplied from the 3D information estimation unit 132, and perform the region division on the basis of the acquired estimated 3D information.

In this case, a region division method may be freely determined. For example, the region division unit 133 may divide the entire region of the main image by clustering the estimated 3D information.

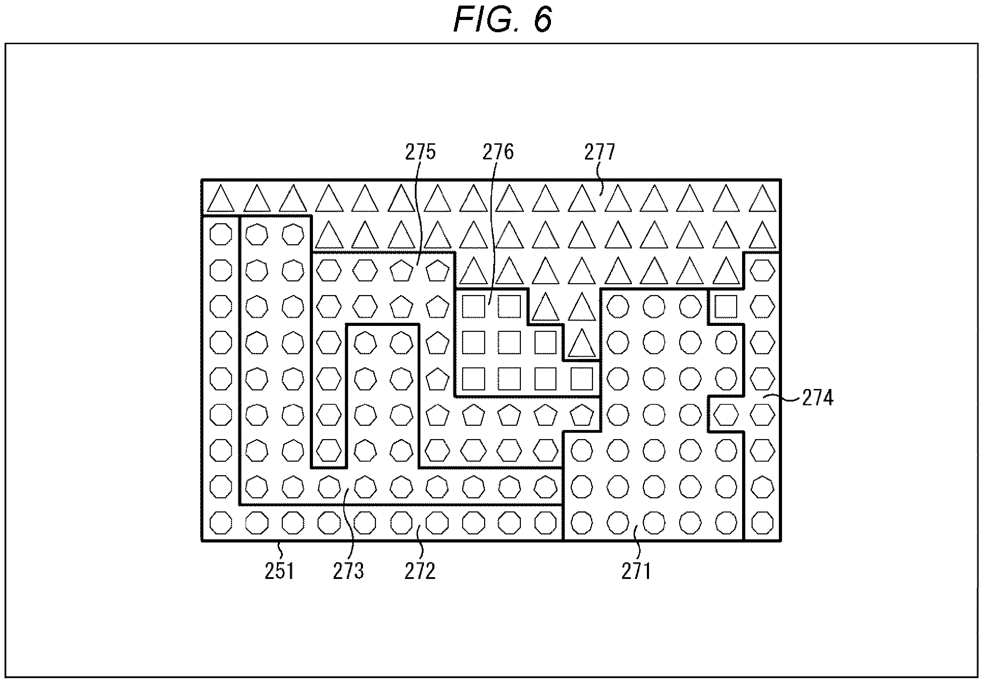

In the example illustrated in Fig. 6, the region division unit 133 clusters estimated 3D information of each position in the estimated 3D information 251 (Fig. 4) and divides the entire region of the main image on the basis of a clustering result thereof. As a result, partial regions 271 to 277 are generated.

A method for this clustering may be freely determined. For example, the region division unit 133 may perform this clustering with use of artificial intelligence (AI). For example, by inputting estimated 3D information to a neural network that is input with estimated 3D information and outputs a result of clustering, the region division unit 133 may derive a result of the clustering, and divide the entire region of the main image by using the result of the clustering.

Note that, also in a case of dividing the region of the main image on the basis of the estimated 3D information as described above, the object region or the non-object region may be set. For example, by inputting the estimated 3D information to a neural network, the region division unit 133 may generate the object region which is a partial region including a main object to be a subject in the main image and the non-object region which is a partial region not including the object.

The region division unit 133 may supply information indicating the partial region generated as described above (information indicating a division result of the entire region of the main image) to the comparison unit 135.

The sensor 3D information acquisition unit 134 performs processing related to acquisition of sensor 3D information. For example, the sensor 3D information acquisition unit 134 may acquire sensor 3D information stored in an image file held by the image file acquisition unit 131. Furthermore, the sensor 3D information acquisition unit 134 may supply the acquired sensor 3D information to the comparison unit 135.

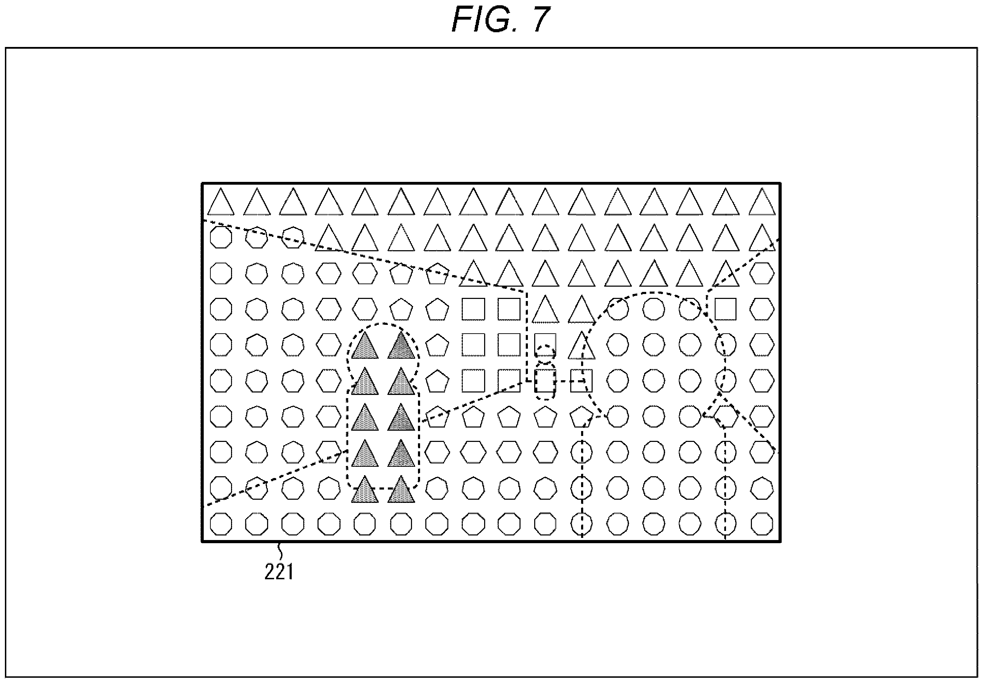

The sensor 3D information 221 illustrated in Fig. 7 is an example of sensor 3D information corresponding to the main image 211 (Fig. 3). Similarly to the case of the estimated 3D information 251, each polygon in the sensor 3D information 221 indicates 3D information (distance from the imaging position) on a position of the polygon in the main image 211. This 3D information is detected by the sensor as described above. Each polygon indicates that, as the number of corners is smaller, an object in a region thereof is farther from the imaging position. In other words, each polygon indicates that, as the number of corners is larger, the object in the region is closer to the imaging position. A resolution of the sensor 3D information 221 may be freely determined, but a higher resolution (for example, the same resolution as that of the main image 211) is desirable unless a data amount, a processing load, and the like are taken into consideration.

Note that, in Fig. 7, a content (picture) of the main image 211 is indicated by a dotted line for the sake of explanation, but this information about the main image 211 may not be included in the actual sensor 3D information 221. That is, the sensor 3D information 221 only needs to include the estimated 3D information of each position indicated by the polygon.

The comparison unit 135 performs processing related to comparison between estimated 3D information and sensor 3D information. For example, the comparison unit 135 may acquire estimated 3D information supplied from the 3D information estimation unit 132. Furthermore, the comparison unit 135 may acquire information supplied from the region division unit 133 and indicating a partial region (information indicating a division result of the entire region of the main image). Furthermore, the comparison unit 135 may acquire the sensor 3D information supplied from the sensor 3D information acquisition unit 134.

The comparison unit 135 may compare the estimated 3D information with the sensor 3D information. For example, the comparison unit 135 may compare the estimated 3D information with the sensor 3D information with use of a partial region generated by the region division unit 133. Furthermore, the comparison unit 135 may supply information indicating a comparison result to the presentation processing unit 136.

A method of comparing the estimated 3D information and the sensor 3D information may be freely determined as long as a partial region is used. For example, the comparison unit 135 may compare the sensor 3D information and the estimated 3D information for every partial region. That is, the comparison unit 135 may compare the sensor 3D information with the estimated 3D information for a partial region generated by the region division unit 133.

For example, when comparing the sensor 3D information 221 of Fig. 7 with the estimated 3D information 251 of Fig. 4 for each partial region of Fig. 5, it can be seen that the 3D information indicated by gray in Fig. 7 is mutually different. That is, it can be seen that the 3D information of the partial region 262 is different.

In a case of detecting 3D information by using a sensor, it is difficult to always obtain completely correct 3D information. Similarly, also in a case of estimating 3D information from an image, it is difficult to always obtain completely correct 3D information. That is, even if the main image is generated by a legitimate method, both the estimated 3D information and the sensor 3D information are highly likely to include errors, and are less likely to be completely consistent. Therefore, it is realistic to determine authenticity of an image while allowing a difference to some extent between the estimated 3D information and the sensor 3D information.

In the conventional method as described in Patent Document 2, an image and distance measurement data (distance estimated from the image) are compared for the entire image, and thus authenticity of the image is determined while a difference in the entire image is allowed to some extent. However, as in the example of Fig. 7, even in a case where there is a clear difference in 3D information, if the region is small, the difference is within an allowable range as the entire image, and there has been a possibility that it is difficult to detect a false image.

On the other hand, the comparison unit 135 compares the estimated 3D information with the sensor 3D information with use of the partial region as described above. Therefore, the comparison unit 135 can more accurately detect partial inconsistency between the image (estimated 3D information) and the sensor 3D information as in the example of Fig. 7. Therefore, the authenticity determination device 100 can more accurately determine the authenticity of the image.

Furthermore, determination of authenticity of an image (detection of a false image) cannot always be performed correctly. For example, it is assumed that, in a captured image in which a person to be a subject is captured with a flat panel as a background on which an object is drawn, inconsistency between the estimated 3D information and the sensor 3D information is detected in the flat panel. However, it is difficult for the comparison unit 135 to determine whether the flat panel is installed to generate a false image (for trick shooting) or whether a signboard installed in a town appears. Therefore, a legitimately generated image may be detected as a false image.

In the conventional method as described in Patent Document 2, since distance measurement data and an image (distance estimated from the image) are compared for the entire image, it has been unable to specify where and how inconsistency occurs. Therefore, in a case where a false image is determined as described above, it has been difficult to determine whether or not the determination is erroneous.

On the other hand, the comparison unit 135 compares the estimated 3D information with the sensor 3D information with use of the partial region as described above. Therefore, the comparison unit 135 can more easily specify a partial region in which inconsistency between the image (estimated 3D information) and the sensor 3D information occurs as in the example of Fig. 7. Therefore, for example, the user can determine whether or not the determination is erroneous on the basis of the image of the partial region. Therefore, the authenticity determination device 100 can more accurately determine the authenticity of the image.

As described above, in a case of comparing the sensor 3D information and the estimated 3D information of the partial region, a method of the comparison may be freely determined.

For example, the comparison unit 135 may derive a difference between the sensor 3D information and the estimated 3D information for every position included in the partial region as a processing target, and may use the difference as a comparison result. Furthermore, the comparison unit 135 may derive a statistical value (for example, a sum, a maximum value, a minimum value, a representative value, an average value, a median value, an error rate, and the like) regarding the difference for the partial region as the processing target, and use the statistical value as a comparison result.

Furthermore, the comparison unit 135 may derive a statistical value (for example, a sum, a maximum value, a minimum value, a representative value, an average value, a median value, an error rate, and the like) for each of the sensor 3D information and the estimated 3D information for every position included in the partial region as the processing target, derive a difference between the statistical values, and use the difference as a comparison result.

Moreover, the comparison unit 135 may determine authenticity of the partial region as the processing target on the basis of a statistical value regarding such a difference or a difference between statistical values, and may use a determination result thereof as a comparison result. For example, the comparison unit 135 may determine whether or not the partial region as the processing target is a valid image, as the determination of the authenticity. Furthermore, the comparison unit 135 may derive a probability (or reliability) that the partial region as the processing target is a valid image, as the determination of the authenticity. In other words, the comparison unit 135 may derive a probability (or a degree of mistrust) that the partial region as the processing target is an invalid image, as the determination of the authenticity.

Note that, in a case of comparing the sensor 3D information and the estimated 3D information of the partial region in this manner, the comparison unit 135 may compare the sensor 3D information and the estimated 3D information for all the partial regions generated by the region division unit 133. Furthermore, this comparison may be performed only for some partial regions. In that case, the comparison unit 135 can perform comparison by using partial information of the main image. For example, the comparison unit 135 may compare the sensor 3D information and the estimated 3D information, for an object region which is a partial region including a main object to be a subject in the main image. Furthermore, for example, the comparison unit 135 may compare the sensor 3D information and the estimated 3D information, for a non-object region (not including a main object) which is a partial region other than the object region.

Furthermore, for example, the comparison unit 135 may derive a first relative positional relationship between partial regions by comparing the sensor 3D information between the partial regions. Furthermore, the comparison unit 135 may derive a second relative positional relationship between partial regions by comparing the estimated 3D information between the partial regions. Furthermore, the comparison unit 135 may compare the derived first relative positional relationship with the derived second relative positional relationship. That is, the comparison unit 135 may compare the relative positional relationship between partial regions in a depth direction, between the sensor 3D information and the estimated 3D information.

A method of deriving the relative positional relationship between the partial regions may be freely determined. For example, the comparison unit 135 may derive a statistical value (for example, a sum, a maximum value, a minimum value, a representative value, an average value, a median value, an error rate, and the like) of 3D information included in each partial region, and derive the relative positional relationship by using the statistical value for each partial region.

As described above, also in a case of detecting inconsistency of the relative positional relationship between partial regions, an occurrence of the inconsistency of 3D information can be detected in units of partial regions. That is, an occurrence of partial inconsistency can be detected more accurately.
Therefore, the authenticity determination device 100 can more accurately determine the authenticity of the image. Furthermore, it is possible to more easily specify a partial region in which inconsistency between an image (estimated 3D information) and sensor 3D information occurs. Therefore, for example, the user can determine whether or not the determination is erroneous on the basis of the image of the partial region. Therefore, the authenticity determination device 100 can more accurately determine the authenticity of the image.

Note that, in this case, the comparison unit 135 can easily perform comparison with a smaller processing amount than the case of comparing the 3D information for each of all the positions in the main image. For example, in the case of the example of Fig. 7, the sensor 3D information of the partial region 262 is farther than the partial region 263 due to an influence of reflectance or the like. By comparing a relative positional relationship between such partial regions, it is possible to easily detect an occurrence of inconsistency of the 3D information without comparing a large number of pieces of 3D information for every position.

Furthermore, the comparison unit 135 may determine the authenticity of the main image on the basis of the comparison result of such a relative positional relationship, and may use a determination result thereof as the comparison result. For example, the comparison unit 135 may determine whether or not the main image is a valid image, as the determination of the authenticity. Furthermore, the comparison unit 135 may derive a probability (or reliability) that the main image is a valid image, as the determination of the authenticity. In other words, the comparison unit 135 may derive a probability (or a degree of mistrust) that the main image is an invalid image, as the determination of the authenticity.

Furthermore, for example, the comparison unit 135 may compare a difference between 3D information of a partial region and 3D information of a region surrounding the partial region, between the estimated 3D information and the sensor 3D information. In this way, by comparing the difference in the 3D information between the partial region and surroundings thereof between the estimated 3D information and the sensor 3D information, it is possible to determine whether a relative position of the partial region with respect to the surroundings is consistent between the estimated 3D information and the sensor 3D information. That is, an occurrence of partial inconsistency can be detected more accurately.
Therefore, the authenticity determination device 100 can more accurately determine the authenticity of the image. Furthermore, it is possible to more easily specify a partial region in which inconsistency between an image (estimated 3D information) and sensor 3D information occurs. Therefore, for example, the user can determine whether or not the determination is erroneous on the basis of the image of the partial region. Therefore, the authenticity determination device 100 can more accurately determine the authenticity of the image.

Note that, in this case, the comparison unit 135 can easily perform comparison with a smaller processing amount than the case of comparing the 3D information for each of all the positions in the main image.
Furthermore, the comparison unit 135 can perform comparison by using partial information of the main image. For example, the comparison unit 135 may compare a difference between 3D information of the object region and 3D information of a region surrounding the object region in the main image. Furthermore, the comparison unit 135 may compare a difference between 3D information of the non-object region and 3D information of a region surrounding the non-object region. By doing in this way, the authenticity of the main image can be determined with a smaller processing amount.

Furthermore, the comparison unit 135 may compare the estimated 3D information and the sensor 3D information by a plurality of techniques. For example, the comparison unit 135 may perform comparison by combining two or more techniques among, as described above, a method of comparing the sensor 3D information and the estimated 3D information of the partial region, a method of comparing a relative positional relationship between partial regions between the sensor 3D information and the estimated 3D information, and a method of comparing a difference in 3D information between the partial region and surroundings thereof between the estimated 3D information and the sensor 3D information. Furthermore, the comparison unit 135 may perform comparison by combining any one or more of the above-described techniques with other techniques.

In that case, the comparison unit 135 may select any of a plurality of obtained comparison results. Furthermore, the comparison unit 135 may combine a plurality of obtained comparison results.

As described above, by applying a plurality of techniques, the authenticity determination device 100 can more accurately determine the authenticity of the image.

The presentation processing unit 136 performs processing related to presentation of an authenticity determination result. For example, the presentation processing unit 136 may acquire information indicating a comparison result obtained with use of a partial region between the estimated 3D information and the sensor 3D information and supplied from the comparison unit 135. Furthermore, on the basis of the information, the presentation processing unit 136 may generate presentation information indicating an authenticity determination result for a partial region of a main image or an authenticity determination result for the entire main image. Moreover, the presentation processing unit 136 may present the generated presentation information.

Note that, in the present specification, "presentation" indicates provision of presentation information to a user, another processing unit, an application program, or the like. Note that this "presentation" may be performed in the authenticity determination device 100 or may be performed in another device. In other words, the "presentation" can include not only that the authenticity determination device 100 provides the presentation information but also that the authenticity determination device 100 causes another device to provide the presentation information. That is, the "presentation" may include supplying the presentation information to another device for causing the another device to provide the presentation information. The presentation information may be supplied via a communication medium or a recording medium.

For example, the presentation processing unit 136 may supply the presentation information to the presentation unit 152 of the input/output interface unit 112. In that case, the presentation unit 152 provides the presentation information to the user, another processing unit, an application program, or the like. Furthermore, the presentation processing unit 136 may supply the presentation information to the communication unit 154 of the input/output interface unit 112. In that case, the communication unit 154 communicates with another device and supplies the presentation information to the another device through the communication. Furthermore, the presentation processing unit 136 may supply the presentation information to the drive 155 of the input/output interface unit 112. In that case, the drive 155 writes the presentation information in a removable recording medium (not illustrated) mounted to itself. When the removable recording medium is mounted to a drive of another device, and the presentation information is read, the presentation information is supplied to the another device.

Note that the presentation information may be presented in any form. For example, the presentation information may be presented to the user or the like as visual information such as an image or character information. Furthermore, the presentation information may be presented to the user or the like as auditory information such as sound. Furthermore, the presentation information may be presented to the user or the like as visual information and auditory information. Furthermore, the presentation information may be presented as data to another processing unit, an application program, or the like.

In other words, the presentation information may include any type of information. For example, the presentation information may include at least either of visual information or auditory information. Furthermore, the presentation information may include other information.

Furthermore, a content (content to be presented) of the presentation information may be of any type as long as the content indicates an authenticity determination result for a partial region of a main image or an authenticity determination result for the entire main image. For example, the presentation information may include a warning indicating suspicion of authenticity. In other words, in a case where the authenticity of the main image is suspicious on the basis of a comparison result, the presentation processing unit 136 may generate presentation information including a warning indicating the suspicion of the authenticity. This warning may be based on the authenticity determination result for a partial region of the main image, that is, may indicate the authenticity determination result for the partial region of the main image. Furthermore, this warning may be based on the authenticity determination result for the entire main image, that is, may indicate the authenticity determination result for the entire main image. Furthermore, in the presentation information, a partial region for which authenticity is suspicious may be clearly indicated. In other words, in a case where the authenticity of the main image is suspicious, the presentation processing unit 136 may generate, on the basis of the comparison result, presentation information explicitly indicating a region for which the authenticity is suspicious. Furthermore, in the presentation information, the object region may be clearly indicated. In other words, the presentation processing unit 136 may generate the presentation information clearly indicating the object region.

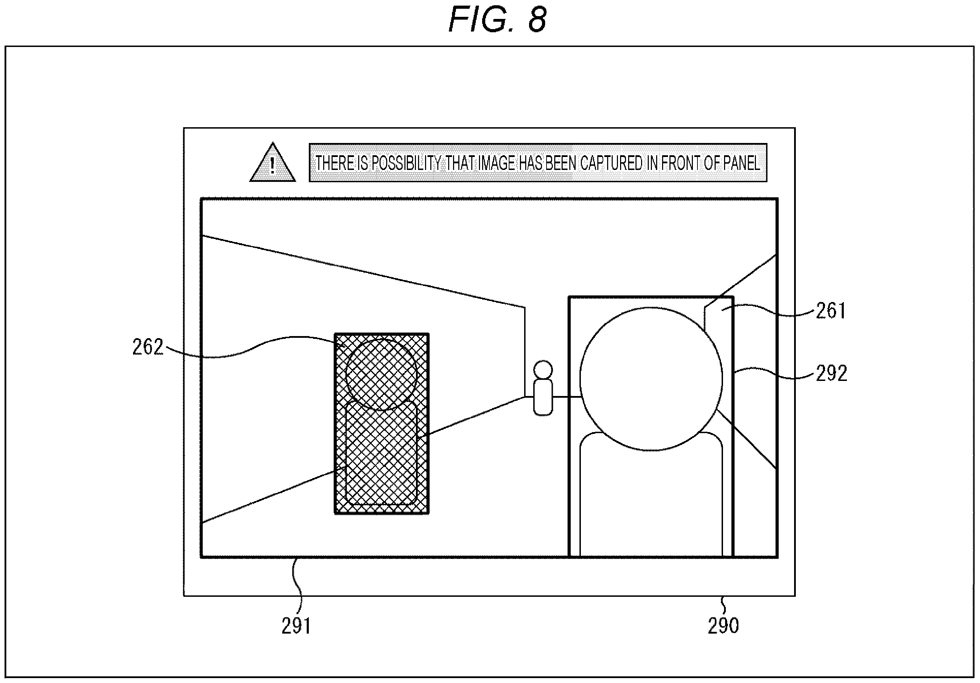

A presentation screen 290 illustrated in Fig. 8 illustrates an example of the presentation information as visual information (image). On the presentation screen 290, the entire main image 211 is displayed on a main image display portion 291. Furthermore, a warning mark and a warning message "there is a possibility that the image has been captured in front of a panel" are displayed above the main image display portion 291. The warning mark and the warning message are displayed as warnings indicating suspicion of authenticity. That is, it can be said that the authenticity determination result for the entire main image 211 is indicated. That is, it can be said that the presentation screen 310 indicates the authenticity determination result for the entire image. Furthermore, in the main image display portion 291, it is clearly indicated by "hatching" that the partial region 262 is a "region for which the authenticity is suspicious". By the comparison unit 135 comparing the estimated 3D information with the sensor 3D information with use of the partial region, such presentation becomes possible.

With the display of those, a user viewing this presentation screen 290 can easily grasp that, for example, there is a high possibility that the partial region 262 is a flat panel (that is, the image is an image in which the person 242 is displayed (printed) on the flat panel). Therefore, the user can check whether or not the determination result is erroneous determination by checking whether or not the presence of the flat panel in the partial region 262 is legitimate. That is, the user can easily check whether or not the determination result is erroneous determination as compared with the case where only the determination result of the entire main image is indicated. Therefore, the user can more accurately determine the authenticity of the main image 211 (whether or not the main image 211 is a false image).

Note that, in the case of the example of Fig. 8, in the main image display portion 291, a thick line frame 292 clearly indicates that the partial region 261 is the object region. With such display, the user can more easily grasp the object region. In other words, the user can easily grasp whether the "region for which the authenticity is suspicious" is the object region or the non-object region. As a result, for example, the user can easily achieve control to change correspondence processing depending on whether the "region for which the authenticity is suspicious" is the object region or the non-object region.

Note that, in the case of the example of Fig. 8, a reason why the authenticity is suspicious is presented as the warning message. In this manner, for example, the presentation processing unit 136 may analyze the reason why the authenticity is suspicious on the basis of a comparison result, and clearly indicate an analysis result as in the example of Fig. 8. Furthermore, the fact that the authenticity is suspicious may be simply presented as the warning message.

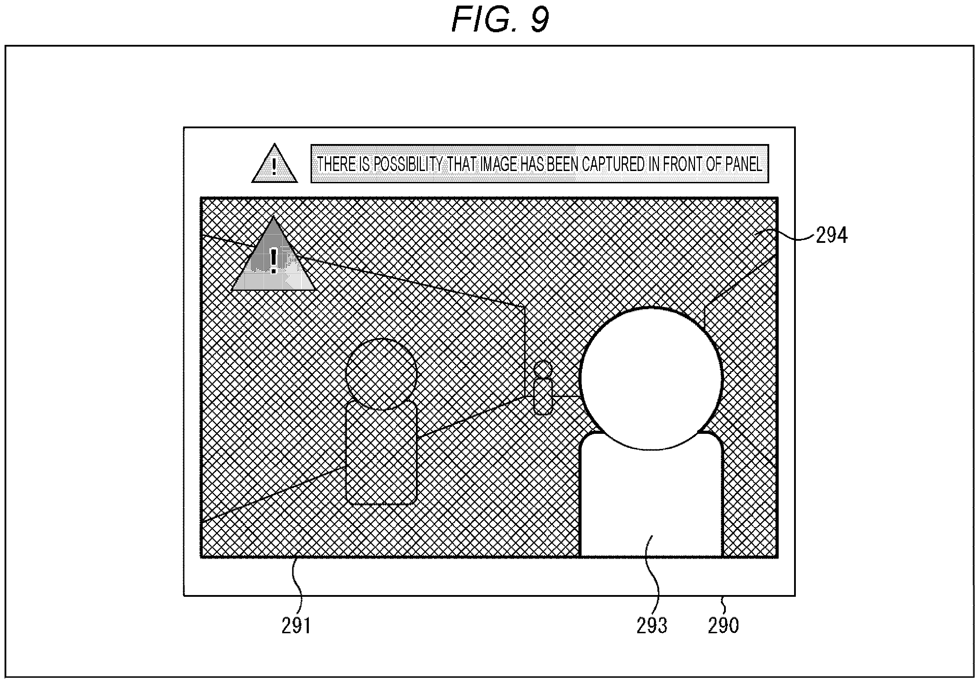

Fig. 9 illustrates another example of the presentation screen 290. In the case of the example of Fig. 9, the entire region of the main image 211 is divided into an object region 293 including the person 241 and a non-object region 294 other than the object region 293. Furthermore, the object region 293 is formed in a shape along an outer shape of the person 241. Then, in the main image display portion 291, it is clearly indicated by "hatching" that the non-object region 294 is the "region for which the authenticity is suspicious". As the number of partial regions increases, a load of processing related to comparison may increase. In a case where whether or not the "region for which the authenticity is suspicious" is the object region is the most important, it is possible to suppress an increase in the load of the processing by such region division. Furthermore, with such display, the user can easily grasp that there is a high possibility that the non-object region 294 (other than the object region 293) is a flat panel.

Note that, in the case of the example of Fig. 9, a warning mark is further displayed in the non-object region 294, and it is more clearly indicated that the non-object region 294 is the "region for which the authenticity is suspicious".

Note that, in a case where the comparison unit 135 compares a relative positional relationship in a depth direction between partial regions between the sensor 3D information and the estimated 3D information, the presentation processing unit 136 may generate the presentation information clearly indicating information regarding the relative positional relationship. Furthermore, in a case where the comparison unit 135 compares a difference between 3D information of a partial region and 3D information of a region surrounding the partial region between the estimated 3D information and the sensor 3D information, the presentation processing unit 136 may generate the presentation information clearly indicating information regarding the difference. Furthermore, the presentation processing unit 136 may confirm validity of an electronic signature corresponding to the image, and indicate a confirmation result in the presentation information. For example, the presentation processing unit 136 acquires the signature 224 from the image file 200 through the image file acquisition unit 131. This signature 224 corresponds to the main image 211 and the sensor 3D information 221. Furthermore, the presentation processing unit 136 confirms validity of the signature 224 by using key information (a device public key or a common key) corresponding to another device (for example, an imaging device) that is a supply source of the image file 200. Then, in a case where the validity of the signature 224 cannot be confirmed, the presentation processing unit 136 determines that there is no authenticity of the main image 211. Then, the presentation processing unit 136 indicates such a confirmation result of the electronic signature in the presentation information. For example, in a case where the validity of the electronic signature cannot be confirmed, the presentation processing unit 136 may cause the presentation screen to display a message or the like indicating the fact. Furthermore, the presentation processing unit 136 may cause the presentation screen to display a message or the like indicating the presence or absence of the validity of the electronic signature. By doing in this way, the authenticity determination device 100 can detect falsification of the image or the 3D information by using the signature. Therefore, the authenticity determination device 100 can more accurately determine the authenticity of the image.

Returning to Fig. 1, the input unit 151 of the input/output interface unit 112 includes an input device, and performs processing related to input of information. The input device may be of any type. For example, the input unit 151 may include a keyboard, a mouse, a microphone, a physical switch, a physical button, a touch panel, an input terminal, and the like. For example, the input unit 151 may receive information input from the outside such as the user or another device via the input device, and supply the information to the control unit 101 or the image analysis engine 111.

The presentation unit 152 includes an output device, and performs processing related to presentation of the presentation information. The output device may be of any type. For example, the presentation unit 152 may include a display, a speaker, and the like. The display presents the presentation information as visual information. Furthermore, the speaker presents the presentation information as auditory information. For example, the presentation unit 152 may acquire the presentation information from the presentation processing unit 136, and present the presentation information to the user or the like via the output device.

The storage unit 153 includes a storage medium, and performs processing related to storage of information. The storage medium may be of any type. For example, the storage unit 153 may include a hard disk, a RAM disk, a nonvolatile memory, and the like. For example, the storage unit 153 may store data, a program, and the like. Furthermore, the storage unit 153 may supply them to the control unit 101 and the image analysis engine 111 as necessary. For example, the storage unit 153 may store (hold) presentation information or an image file for which the authenticity of the main image is determined.

The communication unit 154 includes a communication interface, and performs processing related to communication between with another device. For example, the communication unit 154 may communicate with another device via the communication interface in a manner conforming to any communication standard. This communication may be wired communication, wireless communication, or both.

For example, the communication unit 154 may acquire a program or data supplied from another device through the communication. Furthermore, the communication unit 154 may supply the program or data to the storage unit 153 to store, or may supply the program or data to the drive 155 to record in a removable recording medium (not illustrated). Furthermore, the communication unit 154 may supply the program or data to the control unit 101 or the image analysis engine 111. For example, the communication unit 154 may acquire an image file supplied from another device, and supply the image file to the image file acquisition unit 131.

Furthermore, the communication unit 154 may supply a program or data to another device through the communication. For example, the communication unit 154 may supply a program or data read from the storage unit 153, to another device. Furthermore, the communication unit 154 may supply a program or data read from a removable recording medium (not illustrated) via the drive 155, to another device. Furthermore, the communication unit 154 may supply presentation information supplied from the presentation processing unit 136, to another device.

The drive 155 drives a removable recording medium (not illustrated) attached to itself, and performs processing related to reading and writing of information from and to the removable recording medium. The removable recording medium may be a recording medium of any standard. For example, the removable recording medium may be a magnetic disk, an optical disk, a magneto-optical disk, or a semiconductor memory. For example, the drive 155 may read data, a program, and the like recorded in a removable recording medium and supply the data, the program, and the like to the control unit 101 and the image analysis engine 111. Furthermore, the drive 155 may record data, a program, and the like on a removable recording medium. For example, the drive 155 may record an image file for which the authenticity of the main image is determined and presentation information supplied from the presentation processing unit 136 on a removable recording medium.

By having the above configuration, the authenticity determination device 100 can more accurately detect partial inconsistency between the image (estimated 3D information) and the sensor 3D information, and can more accurately determine the authenticity of the image.

### <Example 1 of flow of authenticity determination processing>

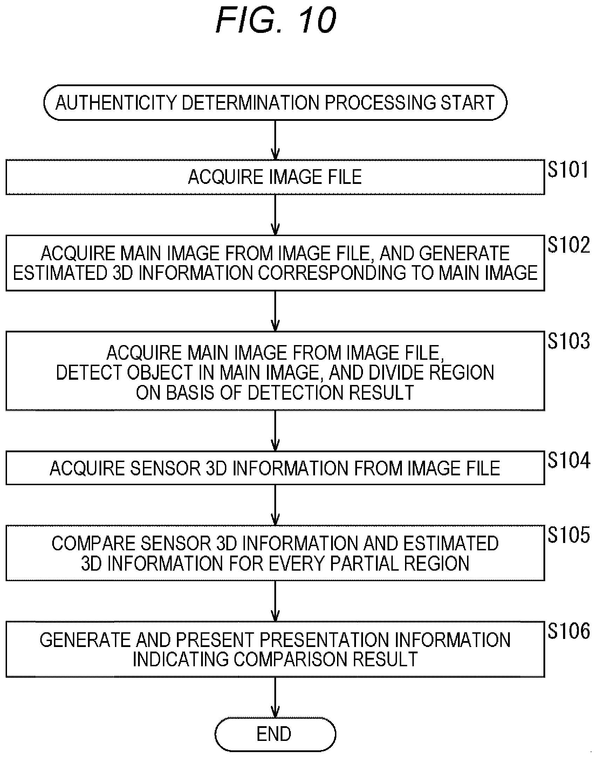

The authenticity determination device 100 executes authenticity determination processing in order to determine authenticity of an image. An example of a flow of the authenticity determination processing will be described with reference to a flowchart of Fig. 10. Note that, in Fig. 10, a description is given to a flow of a case where the region division unit 133 performs region division on the basis of a main image, and the comparison unit 135 compares sensor 3D information with estimated 3D information for a partial region.

In this case, when the authenticity determination processing is started, in step S101, the image file acquisition unit 131 of the authenticity determination device 100 acquires an image file for determination of authenticity of a main image.

In step S102, the 3D information estimation unit 132 acquires the main image from the image file, and generates estimated 3D information corresponding to the main image on the basis of the main image.

In step S103, the region division unit 133 acquires the main image from the image file, detects a main object to be a subject in the main image, and divides a region on the basis of a detection result of the object. For example, the region division unit 133 generates an object region and a non-object region.

In step S104, the sensor 3D information acquisition unit 134 acquires sensor 3D information from the image file.

In step S105, the comparison unit 135 compares the sensor 3D information and the estimated 3D information for every partial region generated in step S103.

In step S106, the presentation processing unit 136 generates and presents presentation information indicating a result of the comparison performed in step S105.

When the processing of step S106 ends, the authenticity determination processing ends.

By executing the authenticity determination processing in this manner, the authenticity determination device 100 can more accurately detect partial inconsistency between the image (estimated 3D information) and the sensor 3D information, and can more accurately determine the authenticity of the image.

### <Example 2 of flow of authenticity determination processing>

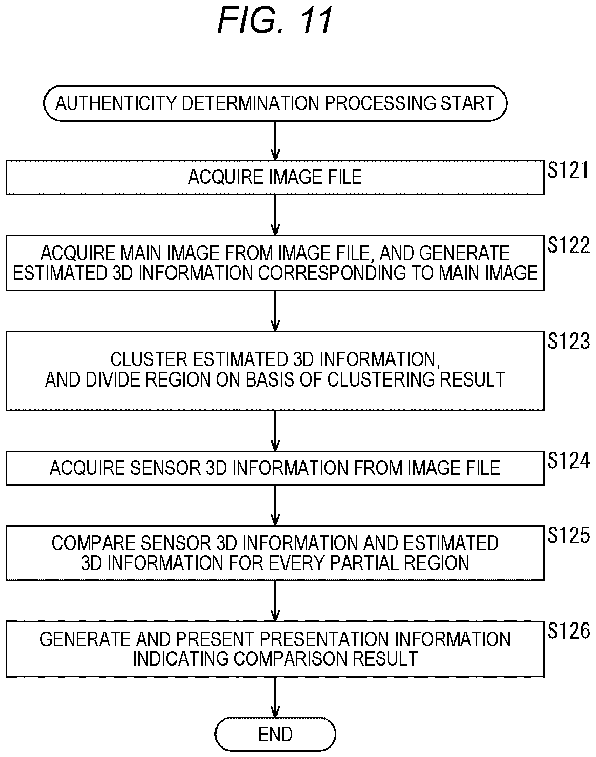

Next, another example of a flow of the authenticity determination processing will be described with reference to a flowchart of Fig. 11. Note that, in Fig. 11, a description is given to a flow of a case where the region division unit 133 performs region division on the basis of estimated 3D information, and the comparison unit 135 compares sensor 3D information with estimated 3D information for a partial region.

In this case, when the authenticity determination processing is started, in step S121, the image file acquisition unit 131 of the authenticity determination device 100 acquires an image file for determination of authenticity of a main image.

In step S122, the 3D information estimation unit 132 acquires the main image from the image file, and generates estimated 3D information corresponding to the main image on the basis of the main image.

In step S123, the region division unit 133 clusters the estimated 3D information generated in step S122, and divides a region on the basis of a clustering result thereof.

In step S124, the sensor 3D information acquisition unit 134 acquires sensor 3D information from the image file.

In step S125, the comparison unit 135 compares the sensor 3D information and the estimated 3D information for every partial region generated in step S123.

In step S126, the presentation processing unit 136 generates and presents presentation information indicating a result of the comparison performed in step S125.

When the processing of step S126 ends, the authenticity determination processing ends.

By executing the authenticity determination processing in this manner, the authenticity determination device 100 can more accurately detect partial inconsistency between the image (estimated 3D information) and the sensor 3D information, and can more accurately determine the authenticity of the image.

### <Example 3 of flow of authenticity determination processing>

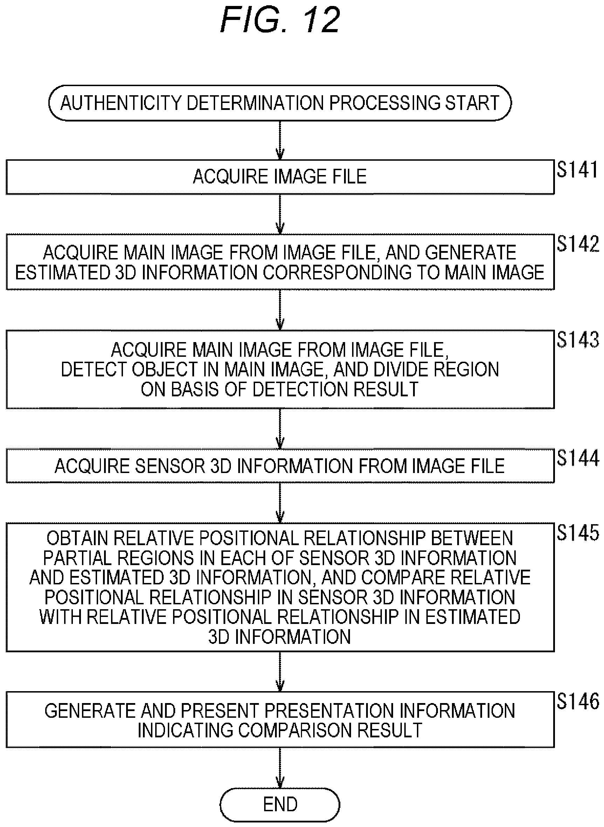

Next, another example of a flow of the authenticity determination processing will be described with reference to a flowchart of Fig. 12. Note that, in Fig. 12, a description is given to a flow of a case where the region division unit 133 performs region division on the basis of a main image, and the comparison unit 135 compares a relative positional relationship between partial regions in a depth direction between sensor 3D information and estimated 3D information.

In this case, when the authenticity determination processing is started, the image file acquisition unit 131 of the authenticity determination device 100 acquires an image file for determination of authenticity of a main image in step S141.

In step S142, the 3D information estimation unit 132 acquires the main image from the image file, and generates estimated 3D information corresponding to the main image on the basis of the main image.

In step S143, the region division unit 133 acquires the main image from the image file, detects a main object to be a subject in the main image, and divides a region on the basis of a detection result of the object.

In step S144, the sensor 3D information acquisition unit 134 acquires sensor 3D information from the image file.

In step S145, the comparison unit 135 obtains a relative positional relationship in a depth direction between partial regions generated in step S143 in each of the sensor 3D information and the estimated 3D information, and compares the relative positional relationship in the sensor 3D information with the relative positional relationship in the estimated 3D information.

In step S146, the presentation processing unit 136 generates and presents presentation information indicating a result of the comparison performed in step S145.

When the processing of step S146 ends, the authenticity determination processing ends.

By executing the authenticity determination processing in this manner, the authenticity determination device 100 can more accurately detect partial inconsistency between the image (estimated 3D information) and the sensor 3D information, and can more accurately determine the authenticity of the image.

### <Example 4 of flow of authenticity determination processing>

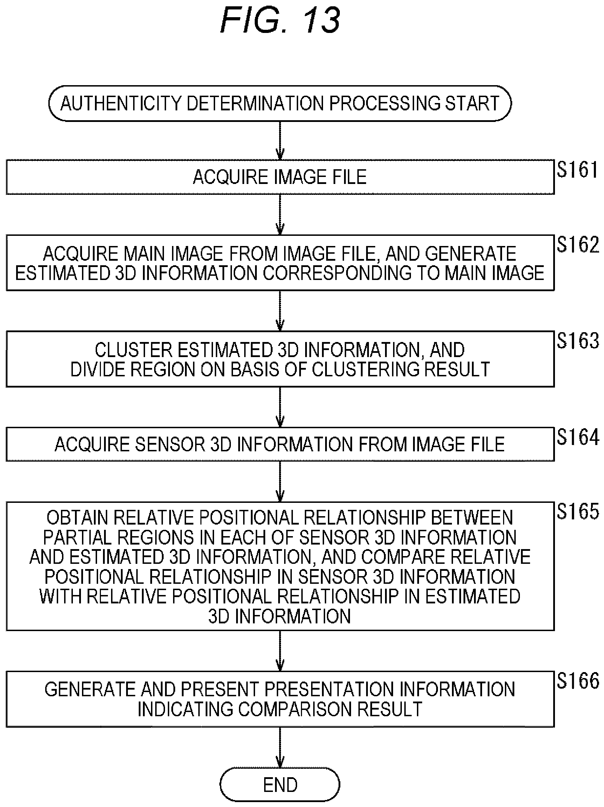

Next, another example of a flow of the authenticity determination processing will be described with reference to a flowchart of Fig. 13. Note that, in Fig. 13, a description is given to a flow of a case where the region division unit 133 performs region division on the basis of estimated 3D information, and the comparison unit 135 compares a relative positional relationship between partial regions in a depth direction between sensor 3D information and the estimated 3D information.

In this case, when the authenticity determination processing is started, the image file acquisition unit 131 of the authenticity determination device 100 acquires an image file for determination of authenticity of a main image in step S161.

In step S162, the 3D information estimation unit 132 acquires the main image from the image file, and generates estimated 3D information corresponding to the main image on the basis of the main image.

In step S163, the region division unit 133 clusters the estimated 3D information generated in step S162, and divides a region on the basis of a clustering result thereof.

In step S164, the sensor 3D information acquisition unit 134 acquires sensor 3D information from the image file.

In step S165, the comparison unit 135 obtains a relative positional relationship in a depth direction between partial regions generated in step S163 in each of the sensor 3D information and the estimated 3D information, and compares the relative positional relationship in the sensor 3D information with the relative positional relationship in the estimated 3D information.

In step S166, the presentation processing unit 136 generates and presents presentation information indicating a result of the comparison performed in step S165.

When the processing of step S166 ends, the authenticity determination processing ends.

By executing the authenticity determination processing in this manner, the authenticity determination device 100 can more accurately detect partial inconsistency between the image (estimated 3D information) and the sensor 3D information, and can more accurately determine the authenticity of the image.

### <Example 5 of flow of authenticity determination processing>

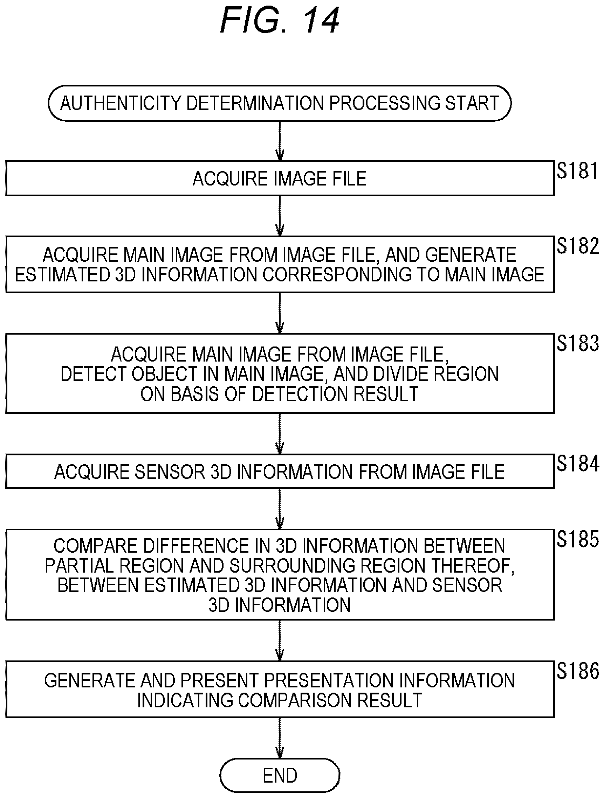

Next, another example of a flow of the authenticity determination processing will be described with reference to a flowchart of Fig. 14. Note that, in Fig. 14, a description is given to a flow of a case where the region division unit 133 performs region division on the basis of a main image, and the comparison unit 135 compares a difference in 3D information between a partial region and a surrounding region thereof between estimated 3D information and sensor 3D information.

In this case, when the authenticity determination processing is started, the image file acquisition unit 131 of the authenticity determination device 100 acquires an image file for determination of authenticity of a main image in step S181.

In step S182, the 3D information estimation unit 132 acquires the main image from the image file, and generates estimated 3D information corresponding to the main image on the basis of the main image.

In step S183, the region division unit 133 acquires the main image from the image file, detects a main object to be a subject in the main image, and divides a region on the basis of a detection result of the object.

In step S184, the sensor 3D information acquisition unit 134 acquires sensor 3D information from the image file.

In step S185, the comparison unit 135 derives a difference in 3D information between a partial region generated in step S183 and a surrounding region thereof in each of the sensor 3D information and the estimated 3D information, and compares the difference in the sensor 3D information with the difference in the estimated 3D information.

In step S186, the presentation processing unit 136 generates and presents presentation information indicating a result of the comparison performed in step S185.

When the processing of step S186 ends, the authenticity determination processing ends.

By executing the authenticity determination processing in this manner, the authenticity determination device 100 can more accurately detect partial inconsistency between the image (estimated 3D information) and the sensor 3D information, and can more accurately determine the authenticity of the image.

### <Example 6 of flow of authenticity determination processing>

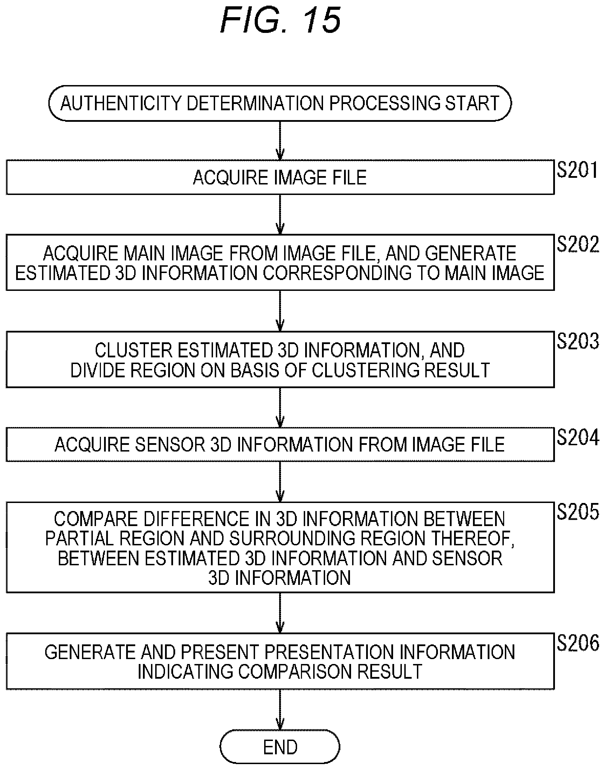

Next, another example of a flow of the authenticity determination processing will be described with reference to a flowchart of Fig. 15. Note that, in Fig. 15, a description is given to a flow of a case where the region division unit 133 performs region division on the basis of estimated 3D information, and the comparison unit 135 compares a difference in 3D information between a partial region and a surrounding region thereof between the estimated 3D information and sensor 3D information.

In this case, when the authenticity determination processing is started, the image file acquisition unit 131 of the authenticity determination device 100 acquires an image file for determination of authenticity of a main image in step S201.

In step S202, the 3D information estimation unit 132 acquires the main image from the image file, and generates estimated 3D information corresponding to the main image on the basis of the main image.

In step S203, the region division unit 133 clusters the estimated 3D information generated in step S202, and divides a region on the basis of a clustering result thereof.

In step S204, the sensor 3D information acquisition unit 134 acquires sensor 3D information from the image file.

In step S205, the comparison unit 135 derives a difference in 3D information between a partial region generated in step S183 and a surrounding region thereof in each of the sensor 3D information and the estimated 3D information, and compares the difference in the sensor 3D information with the difference in the estimated 3D information.

In step S206, the presentation processing unit 136 generates and presents presentation information indicating a result of the comparison performed in step S205.

When the processing of step S206 ends, the authenticity determination processing ends.

By executing the authenticity determination processing in this manner, the authenticity determination device 100 can more accurately detect partial inconsistency between the image (estimated 3D information) and the sensor 3D information, and can more accurately determine the authenticity of the image.

### <Example 7 of flow of authenticity determination processing>

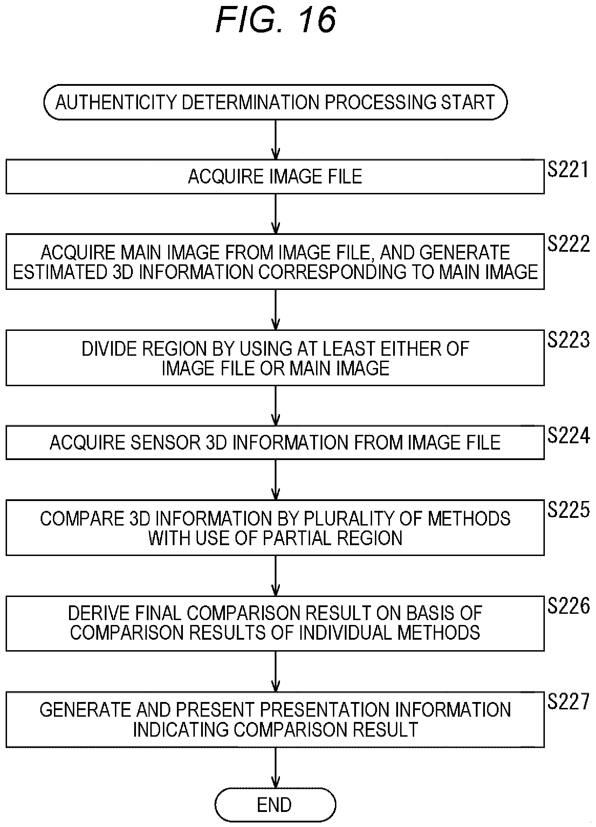

Note that the individual examples in Figs. 10 to 15 can be applied in combination. That is, the region division unit 133 may perform region division on the basis of a main image or estimated 3D information, or on the basis of both of the main image and the estimated 3D information. Furthermore, the comparison unit 135 may compare 3D information by a plurality of methods and derive a final comparison result on the basis of individual comparison results. With reference to a flowchart of Fig. 16, an example of a flow of the authenticity determination processing in such a case will be described.

In this case, when the authenticity determination processing is started, the image file acquisition unit 131 of the authenticity determination device 100 acquires an image file for determination of authenticity of a main image in step S221.

In step S222, the 3D information estimation unit 132 acquires the main image from the image file, and generates estimated 3D information corresponding to the main image on the basis of the main image.

In step S223, the region division unit 133 divides a region by using at least either of the main image stored in the image file or the estimated 3D information generated in step S222. That is, the region division unit 133 may divide the region on the basis of the main image similarly to the case of steps S103, S143, and S183 described above, or may divide the region on the basis of the estimated 3D information similarly to the case of steps S123, S163, and S203 described above. Furthermore, both of them may be combined.

In step S224, the sensor 3D information acquisition unit 134 acquires sensor 3D information from the image file.

In step S225, the comparison unit 135 compares the sensor 3D information and the estimated 3D information by a plurality of methods with use of a partial region generated in step S183. For example, the comparison unit 135 compares the sensor 3D information and the estimated 3D information for every partial region generated in step S223, similarly to the case of steps S105 and S125 described above. Then, the comparison unit 135 obtains a relative positional relationship in a depth direction between partial regions generated in step S223 in each of the sensor 3D information and the estimated 3D information similarly to the case of steps S145 and S165 described above, and compares the relative positional relationship in the sensor 3D information with the relative positional relationship in the estimated 3D information. Moreover, the comparison unit 135 derives a difference in 3D information between a partial region generated in step S223 and a surrounding region thereof in each of the sensor 3D information and the estimated 3D information, similarly to the case of steps S185 and S205 described above, and compares the difference in the sensor 3D information with the difference in the estimated 3D information.

In step S226, the comparison unit 135 derives a final comparison result on the basis of the comparison results of individual methods derived in step S225. For example, the comparison unit 135 may select, as the final comparison result, a result having high evaluation obtained on the basis of a predetermined method, among the comparison results of the individual methods. Furthermore, the comparison unit 135 may combine (a plurality of comparison results among) the comparison results of the individual methods to generate the final comparison result.

In step S227, the presentation processing unit 136 generates and presents presentation information indicating the final comparison result derived in step S226.

When the processing of step S227 ends, the authenticity determination processing ends.

By executing the authenticity determination processing in this manner, the authenticity determination device 100 can more accurately detect partial inconsistency between the image (estimated 3D information) and the sensor 3D information, and can more accurately determine the authenticity of the image.

### <3. Determination of authenticity of processed image>

An authenticity determination target may be other than a captured image. For example, the authenticity determination device 100 may set a processed image obtained by processing a captured image as an authenticity determination target. In that case, the authenticity determination device 100 may determine authenticity of the processed image by using an original image associated with the processed image, instead of the processed image.

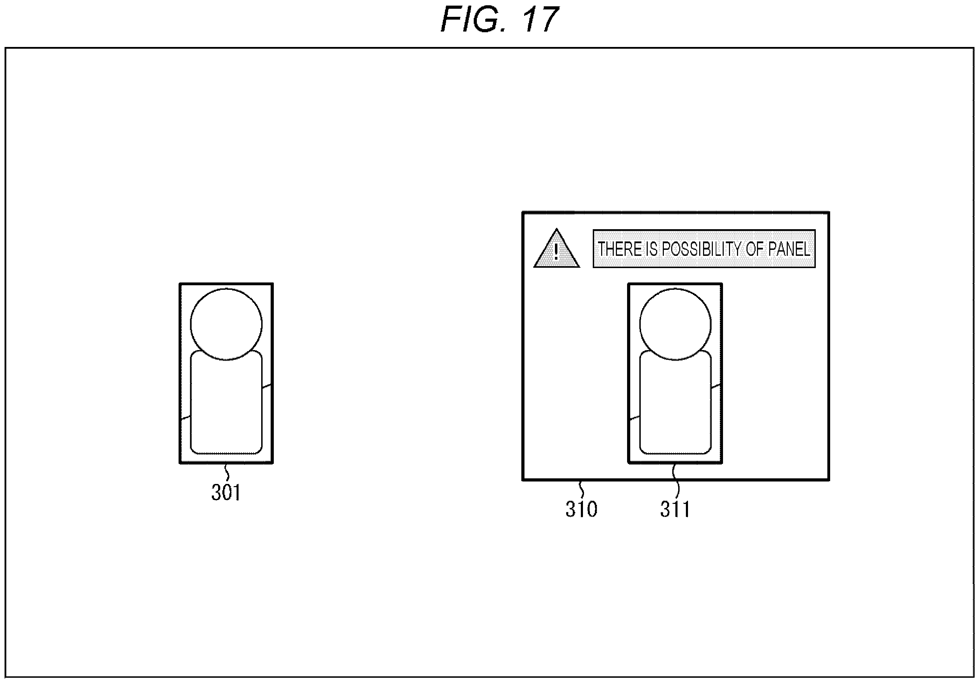

For example, it is assumed that the main image 211 which is the original image is associated with an image 301 (Fig. 17) obtained by cropping (cutting out) the partial region 262 which is a part of the main image 211 (Fig. 5), and the authenticity determination device 100 is able to acquire the original image on the basis of the image 301. When the authenticity determination device 100 determines authenticity of such the image 301 (cropped image), the authenticity determination may be performed by setting the main image 211, which is the original image, as a processing target and setting the image 301 as a partial region (crop region) in the main image 211.

For example, the image file acquisition unit 131 may acquire an image file that stores the original image (main image 211) of the image 301. Furthermore, the 3D information estimation unit 132 may acquire the main image 211 from the image file, estimate 3D information on the basis of the main image 211, and generate estimated 3D information corresponding to the main image 211. By doing in this way, since the 3D information estimation unit 132 can estimate the 3D information by also using a portion other than the partial region 262, it is possible to estimate the 3D information more accurately than the case of estimating the 3D information only from the image 301.

Furthermore, the region division unit 133 may acquire the main image 211 from the image file, divide the entire region of the main image 211 (original image), and generate the partial region 262. That is, the region division unit 133 may set a region corresponding to the image 301 (processed image) in the main image 211 as a partial region.

The comparison unit 135 may compare the estimated 3D information with the sensor 3D information with use of the partial region 262 (partial region corresponding to the image 301) set in this manner. As a result, the comparison unit 135 can process the image 301 as a partial region. Therefore, for example, the comparison unit 135 can compare the estimated 3D information and the sensor 3D information of the partial region 262, similarly to the case described with reference to flowcharts of Figs. 10 and 11. Furthermore, similarly to the case described with reference to flowcharts of Figs. 12 and 13, the comparison unit 135 can also compare a relative positional relationship between partial regions in a depth direction between the sensor 3D information and the estimated 3D information. Furthermore, the comparison unit 135 can also compare a difference in the 3D information between a partial region and a surrounding region thereof between the estimated 3D information and the sensor 3D information, similarly to the case described with reference to flowcharts of Figs. 14 and 15. In addition, the comparison unit 135 can perform comparison by a plurality of methods similarly to the case described with reference to a flowchart of Fig. 16.

Therefore, the authenticity determination device 100 can more accurately detect partial inconsistency between the image (estimated 3D information) and the sensor 3D information, and can more accurately determine the authenticity of the image.

Note that the presentation processing unit 136 may generate presentation information indicating a determination result of the authenticity of the image 301 on the basis of such a comparison result. A presentation screen 310 illustrated in Fig. 17 illustrates an example of presentation information as visual information (image) in this case. On the presentation screen 310, the image 301 is displayed on an image display portion 311. Furthermore, a warning mark and a warning message "there is a possibility that the image has been captured in front of a panel" are displayed above the image display portion 311. These are displayed as warnings indicating suspicion of authenticity. As described above, the comparison unit 135 processes the image 301, which is a cropped image, as a partial region of the main image 211. That is, it can be said that the partial region of the main image 211 is displayed on the image display portion 311 of the presentation screen 310. Furthermore, it can be said that the warning message on the presentation screen 310 indicates a determination result of authenticity for the partial region. That is, it can be said that the presentation screen 310 indicates an authenticity determination result for the partial region of the image.

### <Example 8 of flow of authenticity determination processing>

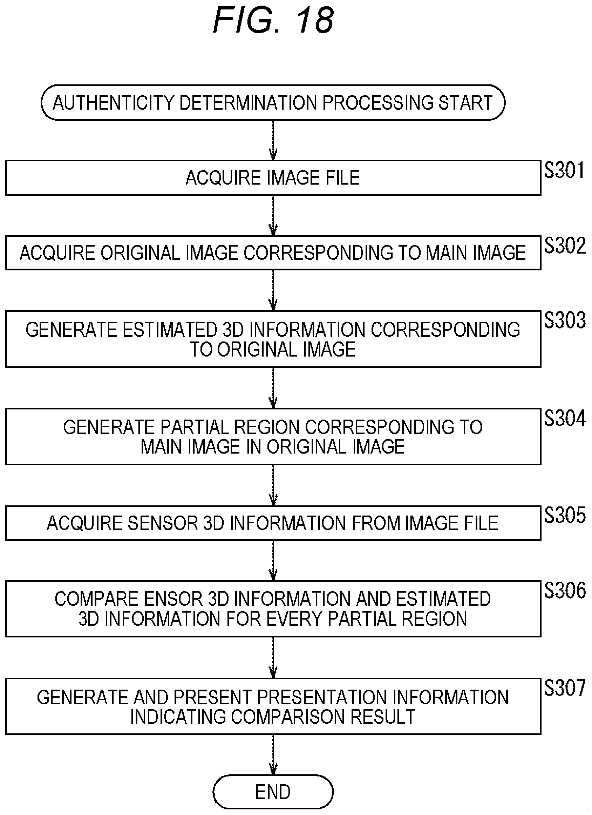

An example of a flow of the authenticity determination processing in this case will be described with reference to a flowchart of Fig. 18. Note that, in Fig. 18, a description is given to a flow of processing of a case where the above-described method is applied to the example of Fig. 10.

In this case, when the authenticity determination processing is started, in step S301, the image file acquisition unit 131 of the authenticity determination device 100 acquires an image file storing a processed image for determination of the authenticity.

In step S302, the image file acquisition unit 131 acquires an original image corresponding to a main image (processed image) stored in the image file.

In step S303, the 3D information estimation unit 132 estimates 3D information of the original image on the basis of the original image, and generates estimated 3D information corresponding to the original image.

In step S304, the region division unit 133 divides the entire region of the original image, and generates a partial region corresponding to the processed image.

In step S305, the sensor 3D information acquisition unit 134 acquires sensor 3D information corresponding to the original image from the image file of the original image.

In step S306, the comparison unit 135 compares the sensor 3D information and the estimated 3D information with use of the partial region corresponding to the processed image generated in step S304.

In step S307, the presentation processing unit 136 generates and presents presentation information indicating a result of the comparison performed in step S306.

When the processing of step S307 ends, the authenticity determination processing ends.

By executing the authenticity determination processing in this manner, the authenticity determination device 100 can more accurately detect partial inconsistency between the processed image (estimated 3D information thereof) and the sensor 3D information, and can more accurately determine the authenticity of the processed image.

Note that the method for determination of the authenticity of the processed image by using the original image of the processed image described above can be similarly applied to individual examples of Figs. 11 to 16.

### <4. Determination of authenticity of moving image>

An authenticity determination target of the authenticity determination device 100 may be a still image or a moving image. In a case of determining authenticity of a moving image, the authenticity determination device 100 may determine authenticity for each frame of the moving image, similarly to the case of a still image.

For example, the 3D information estimation unit 132 may estimate 3D information for every frame, and generate estimated 3D information corresponding to each frame. Furthermore, the region division unit 133 may divide the entire region for every frame to generate a partial region. Furthermore, the comparison unit 135 may compare the estimated 3D information and sensor 3D information with use of the partial region for every frame. Furthermore, the presentation processing unit 136 may generate presentation information on the basis of a comparison result for every frame. By doing in this way, the authenticity of the moving image can be determined for every frame.

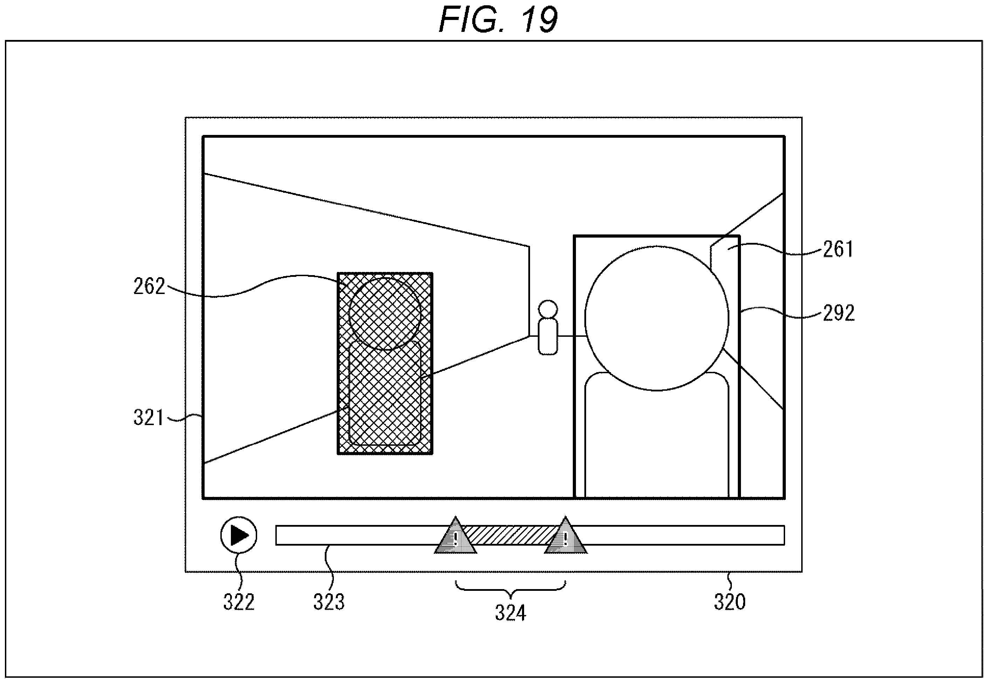

For example, the presentation processing unit 136 may set the presentation information as visual information, and display an authenticity determination result as a moving image. A presentation screen 320 illustrated in Fig. 19 illustrates an example of the presentation information as visual information (image). On the presentation screen 320, a moving image as a main image is displayed on a main image display portion 321. Furthermore, in the main image display portion 321, it is clearly indicated by "hatching" that the partial region 262 is a "region for which the authenticity is suspicious". This display is displayed for each frame of the moving image. That is, in a case where a position and a size of the partial region 262 change in a time direction in the moving image, a range of "hatching" similarly changes. The comparison unit 135 can perform such presentation by comparing the estimated 3D information and the sensor 3D information with use of the partial region for each frame.

Note that, in the case of the example of Fig. 19, in the main image display portion 321, a thick line frame 292 clearly indicates that the partial region 261 is the object region. With such display, the user can more easily grasp the object region. Note that this display is displayed for each frame of the moving image. That is, in a case where a position and a size of the partial region 261 change in a time direction in the moving image, the thick line frame 292 similarly changes.

Furthermore, a reproduction control button 322 is provided as a graphical user interface (GUI) below the main image display portion 321. For example, when the user operates the reproduction control button 322, reproduction, stop, and the like of the moving image and the comparison result displayed on the main image display portion 321 are controlled. That is, for example, when the user operates the reproduction control button 322, an image of a desired frame and a comparison result can be displayed on the main image display portion 321.

Note that the presentation processing unit 136 may generate presentation information indicating a range in a time direction in which a region for which the authenticity is suspicious is present in the moving image. For example, in the presentation information, a range of frames in which a region for which the authenticity is suspicious is present may be clearly indicated. Furthermore, in the presentation information, a time during which the region for which the authenticity is suspicious is present may be clearly indicated.

For example, as illustrated in Fig. 19, a time bar 323 may be provided as a GUI below the main image display portion 321, and a range of frames in which the region for which the authenticity is suspicious is present may be indicated in the time bar 323. In the case of the example of Fig. 19, a range 324 indicated by a diagonal line pattern indicates a range of frames in which the "region for which the authenticity is suspicious" is present. By clearly indicating such information in the presentation information, the user can more easily grasp frames of the moving image in which the "region for which the authenticity is suspicious" is present.

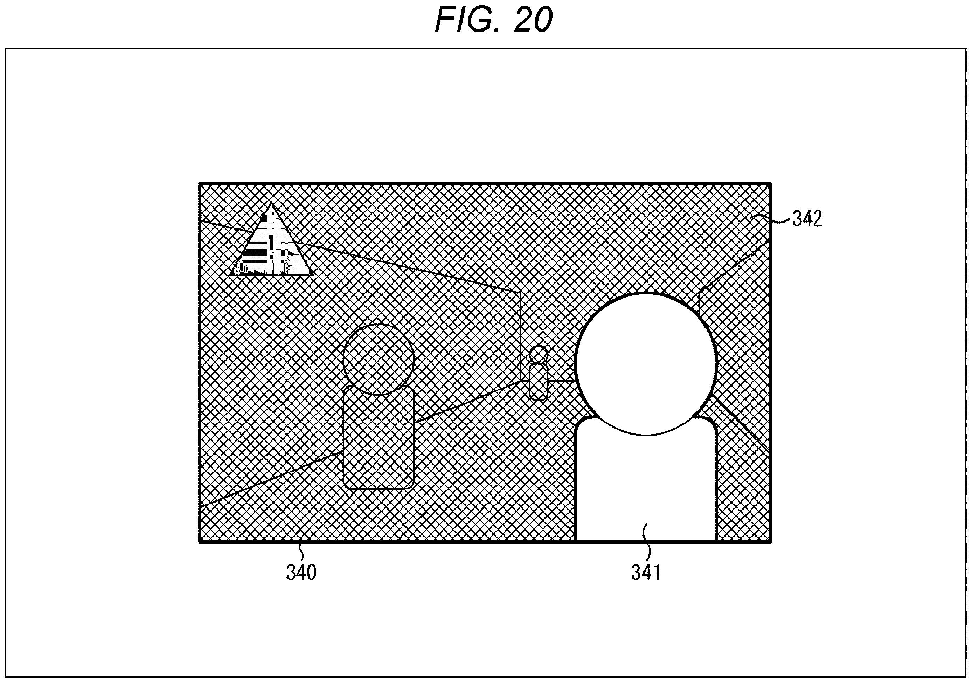

Furthermore, the presentation processing unit 136 may generate a reduced image of a frame in which a region for which the authenticity is suspicious is present. For example, as illustrated in Fig. 20, the presentation processing unit 136 may generate a reduced image 340 of a frame in which the region for which the authenticity is suspicious is present, and associate the reduced image with the main image. In the reduced image 340, an object region 341 and a non-object region 342 are formed as partial regions, and it is clearly indicated by "hatching" that the non-object region 342 is the "region for which the authenticity is suspicious". By referring to such the reduced image 340, the user can easily grasp that there is a high possibility that the non-object region 342 (other than the object region 341) is a flat panel. Note that, in the case of the example of Fig. 20, a warning mark is further displayed in the non-object region 342, and it is more clearly indicated that the non-object region 342 is the "region for which the authenticity is suspicious".

### <Example 9 of flow of authenticity determination processing>

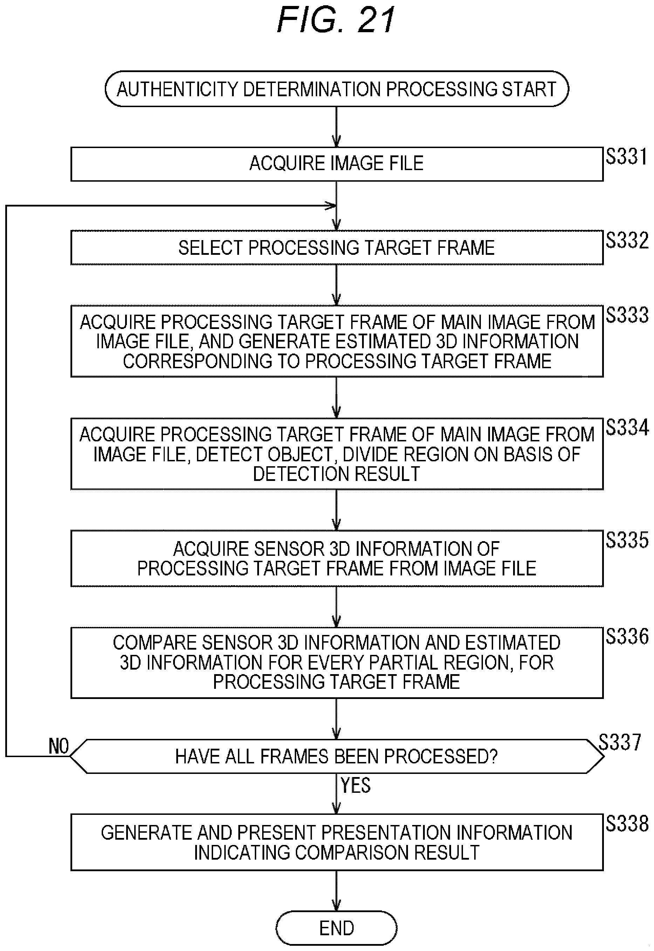

An example of a flow of the authenticity determination processing in this case will be described with reference to a flowchart of Fig. 21. Note that, in Fig. 21, a description is given to a flow of processing of a case where the above-described method is applied to the example of Fig. 10.

In this case, when the authenticity determination processing is started, in step S331, the image file acquisition unit 131 of the authenticity determination device 100 acquires an image file for determination of authenticity of a main image (moving image).

In step S332, the image file acquisition unit 131 selects an unprocessed frame as a processing target frame from among individual frames of the moving image as the main image. For example, the image file acquisition unit 131 selects each frame as a processing target frame in chronological order. For example, in a case of the first time, the image file acquisition unit 131 selects a head frame of the moving image. Furthermore, in a case of the second and subsequent times, the image file acquisition unit 131 updates the processing target frame to the next frame in chronological order.

In step S333, the 3D information estimation unit 132 acquires the processing target frame of the main image (moving image) from the image file, and generates estimated 3D information corresponding to the processing target frame on the basis of the processing target frame.

In step S334, the region division unit 133 acquires a processing target frame of the main image (moving image) from the image file, detects a main object to be a subject in the processing target frame, and divides the entire region of the processing target frame on the basis of a detection result of the object. For example, the region division unit 133 generates an object region and a non-object region in the processing target frame.

In step S335, the sensor 3D information acquisition unit 134 acquires sensor 3D information of the processing target frame from the image file.

In step S336, the comparison unit 135 compares the sensor 3D information and the estimated 3D information for every partial region generated in step S334, for the processing target frame. By doing in this way, a comparison result for the processing target frame is obtained.

In step S337, the image file acquisition unit 131 determines whether or not all the frames have been processed. In a case where it is determined that there is an unprocessed frame, the processing returns to step S332, and the subsequent processing is executed. That is, for each frame of the main image (moving image), each processing of steps S332 to S337 is executed, and a comparison result is obtained. In a case where it is determined in step S337 that all the frames of the main image (moving image) have been processed, the processing proceeds to step S338.

In step S338, the presentation processing unit 136 generates and presents presentation information indicating the comparison result of each frame obtained as described above.

When the processing of step S338 ends, the authenticity determination processing ends.

By executing the authenticity determination processing in this manner, the authenticity determination device 100 can determine the authenticity for each frame of the moving image, and can more accurately determine the authenticity of the moving image.

### <5. Embodiment (image processing system)>

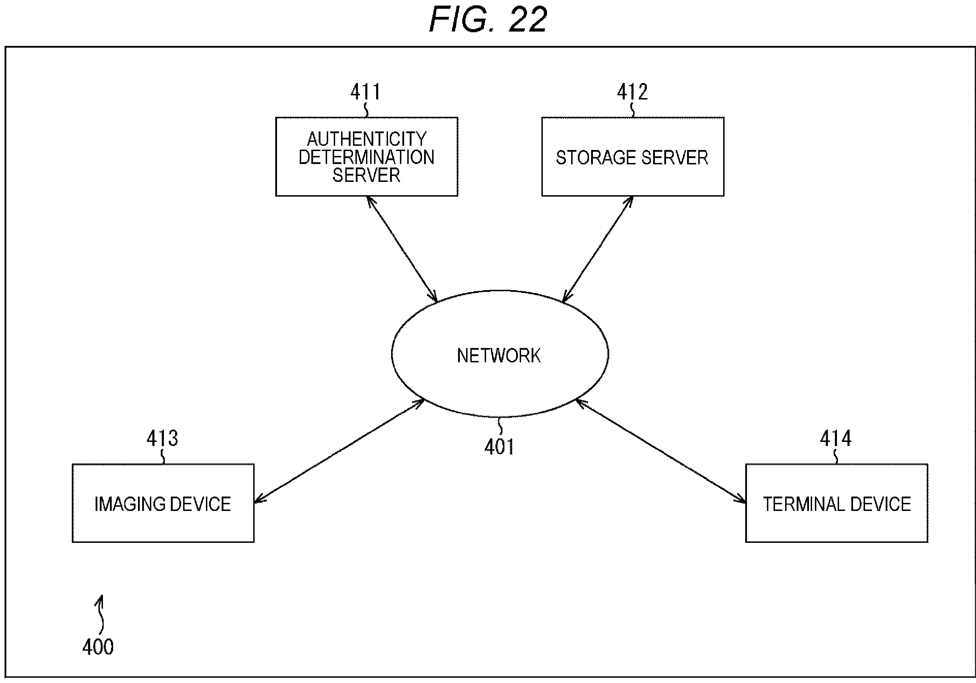

The present technology is not limited to the authenticity determination device 100 described above, and can be applied to any configuration. For example, the present technology can also be applied to an image processing system. Fig. 22 is a diagram illustrating an example of a configuration of an image processing system to which the present technology is applied. An image processing system 400 illustrated in Fig. 22 is a system that manages images. As illustrated in Fig. 22, the image processing system 400 includes an authenticity determination server 411, a storage server 412, an imaging device 413, and a terminal device 414 communicably connected to each other via a network 401.

The network 401 is a communication network serving as a communication medium between the individual apparatuses. The network 401 may be a communication network for wired communication, a communication network for wireless communication, or a communication network for both the wireless communication and wired communication. For example, the network 401 may be a wired local area network (LAN), a wireless LAN, a public telephone line network, a wide area communication network for a wireless mobile body such as a so-called 4G line or 5G line, the Internet, or the like, or a combination thereof. Furthermore, the network 401 may be a single communication network or a plurality of communication networks. Furthermore, for example, a part or all of the network 401 may be configured by a communication cable of a predetermined standard, such as a universal serial bus (USB) (registered trademark) cable, a high-definition multimedia interface (HDMI) (registered trademark) cable, or the like.

The imaging device 413 generates a captured image by, for example, capturing an image of a subject, and generates an image file that stores the captured image. The imaging device 413 uploads the generated image file to the storage server 412, and causes the image file to be managed. The storage server 412 stores and manages the uploaded image file. The terminal device 414 downloads and reproduces a desired image file from the storage server 412.

The authenticity determination server 411 determines authenticity of an image. For example, the authenticity determination server 411 acquires an image file uploaded by the imaging device 413 to the storage server 412, and determines authenticity of a main image stored in the image file. The authenticity determination server 411 supplies presentation information indicating a determination result thereof to the imaging device 413, and causes the presentation information to be presented. Furthermore, the authenticity determination server 411 acquires an image file requested to be downloaded by the terminal device 414 to the storage server 412, and determines authenticity of a main image stored in the image file. The authenticity determination server 411 supplies presentation information indicating a determination result thereof to the terminal device 414, and causes the presentation information to be presented.

By doing in this way, for example, a user of the imaging device 413 or the terminal device 414 can confirm the authenticity of the main image. Furthermore, for example, only an image file whose authenticity has been confirmed can be managed by the storage server 412.

In such the image processing system 400, the authenticity determination device 100 in Fig. 1 may be applied as the authenticity determination server 411. That is, the authenticity determination server 411 may have a configuration similar to that of the authenticity determination device 100 and execute processing similar to that of the authenticity determination device 100. By doing in this way, the present technology described in <2. Determination of authenticity of image with use of partial region>, <3. Determination of authenticity of processed image>, or <4. Determination of authenticity of moving image> can be applied to the authenticity determination server 411. That is, the authenticity determination server 411 can obtain an effect similar to that of the authenticity determination device 100 described above. That is, the authenticity determination server 411 (image processing system 400) can more accurately determine the authenticity of the image.

Note that the configuration of the image processing system 400 may be freely determined. For example, a plurality of authenticity determination servers 411 to a plurality of terminal devices 414 may be provided. Furthermore, devices other than the authenticity determination server 411 to the terminal device 414 may be connected to the network 401.

### <6. Supplementary Note>

### <Computer>

The above-described series of processing can be executed by hardware or software. In a case where a series of processing is executed by software, a program included in the software is installed on a computer. Here, the computer includes a computer incorporated in dedicated hardware, a general-purpose personal computer capable of executing various functions by installing various programs, and the like, for example.

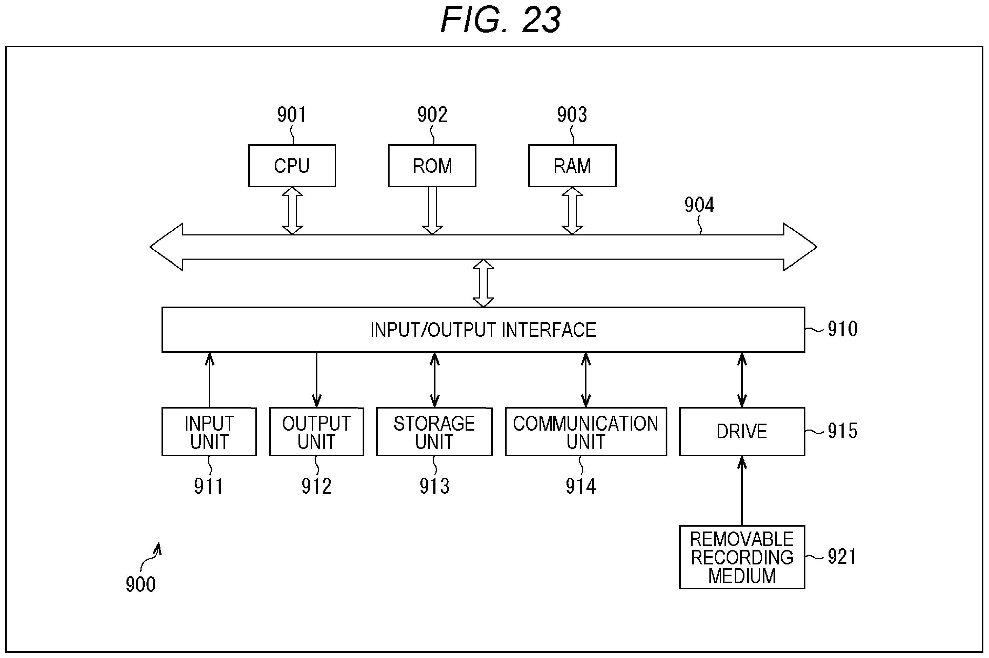

Fig. 23 is a block diagram illustrating a configuration example of hardware of a computer which executes a series of processes described above by a program.

In a computer 900 illustrated in Fig. 23, a central processing unit (CPU) 901, a read only memory (ROM) 902, and a random access memory (RAM) 903 are mutually connected via a bus 904.

Furthermore, an input/output interface 910 is also connected to the bus 904. An input unit 911, an output unit 912, a storage unit 913, a communication unit 914, and a drive 915 are connected to the input/output interface 910.

The input unit 911 includes, for example, a keyboard, a mouse, a microphone, a touch panel, an input terminal, and the like. The output unit 912 includes, for example, a display, a speaker, an output terminal, and the like. The storage unit 913 includes, for example, a hard disk, a RAM disk, a non-volatile memory and the like. The communication unit 914 includes, for example, a network interface. The drive 915 drives a removable recording medium 921 such as a magnetic disk, an optical disk, a magneto-optical disk, or a semiconductor memory.

In the computer configured as described above, for example, the CPU 901 loads a program stored in the storage unit 913 into the RAM 903 via the input/output interface 910 and the bus 904 and executes the program. As a result, the series of processes described above is performed. The RAM 903 may appropriately store data and the like necessary for the CPU 901 to execute various processes.

The program executed by the computer may be recorded in the removable recording medium 921 as a package medium or the like and applied, for example. In that case, the program may be read from the removable recording medium 921 attached to the drive 915 and installed in the storage unit 913 via the input/output interface 910.

Furthermore, this program may be provided via any wired or wireless transmission medium such as a local area network, the Internet, digital satellite broadcasting, or the like. In this case, the program may be received by the communication unit 914 and installed in the storage unit 913 via the input/output interface 910.

Furthermore, the program may be installed in the ROM 902, the storage unit 913, or both in advance.

### <Applicable target of present technology>

The present technology may be applied to any configuration. For example, the present technology may be applied to various electronic devices.

Furthermore, for example, the present technology can also be implemented as a partial configuration of a device, such as a processor (for example, a video processor) as a system large scale integration (LSI) or the like, a module (for example, a video module) using a plurality of the processors or the like, a unit (for example, a video unit) using a plurality of the modules or the like, or a set (for example, a video set) obtained by further adding other functions to the unit.

Furthermore, for example, the present technology can also be applied to a network system including a plurality of devices. For example, the present technology may be implemented as cloud computing shared and processed in cooperation by a plurality of devices through a network. For example, the present technology may be implemented in a cloud service that provides a service related to an image (moving image) to any terminal such as a computer, an audio visual (AV) device, a portable information processing terminal, or an Internet of Things (IoT) device.

Note that, in the present specification, a system means a set of a plurality of components (devices, modules (parts) and the like), and it does not matter whether or not all the components are in the same housing. Therefore, a plurality of devices stored in different housings and connected via a network and one device in which a plurality of modules is stored in one housing are both systems.

### <Others>

Note that, in this specification, the term "associating" means, for example, when processing one data, allowing other data to be used (to be linked), for example. That is, the data associated with each other may be collected as one data or may be made individual data. For example, information associated with the coded data (image) may be transmitted on a transmission path different from that of the coded data (image). Furthermore, for example, the information associated with the coded data (image) may be recorded in a recording medium different from that of the coded data (image) (or another recording area of the same recording medium). Note that, this "association" may be of not entire data but a part of data. For example, a moving image and information corresponding to the moving image may be associated with each other in any unit such as a plurality of frames, one frame, or a part within a frame.

Note that, in the present specification, terms such as "combine", "multiplex", "add", "merge", "include", "store", "put in", "introduce", and "insert" mean, for example, to combine a plurality of objects into one, such as to combine coded data and metadata into one data, and mean one method of "associating" described above.

Furthermore, the embodiments of the present technology are not limited to the above-described embodiments, and various modifications are possible without departing from the scope of the present technology.

For example, a configuration described as one device (or processing unit) may be divided and configured as a plurality of devices (or processing units). Conversely, configurations described above as a plurality of devices (or processing units) may be collectively configured as one device (or processing unit). Furthermore, it goes without saying that a configuration other than the above-described configurations may be added to the configuration of each device (or each processing unit). Moreover, if the configuration and operation of the entire system are substantially the same, a part of the configuration of a certain device (or processing unit) may be included in the configuration of another device (or another processing unit).

Furthermore, for example, the above-described programs may be executed in any device. In this case, the device is only required to have a necessary function (functional block and the like) and obtain necessary information.

Furthermore, for example, each step in one flowchart may be executed by one device, or may be executed by being shared by a plurality of devices. Moreover, in a case where a plurality of pieces of processing is included in one step, the plurality of pieces of processing may be executed by one device, or may be shared and executed by a plurality of devices. In other words, a plurality of pieces of processing included in one step can be executed as a plurality of steps. Conversely, the processes described as the plurality of the steps can also be collectively executed as one Step.

Furthermore, for example, in a program executed by the computer, processing of steps describing the program may be executed in a time-series order in the order described in the present specification, or may be executed in parallel or individually at a required timing such as when a call is made. That is, as long as there is no contradiction, the processing of each step may be executed in an order different from the above-described order. Moreover, the processes in the steps describing the program may be executed in parallel with processes of another program, or may be executed in combination with processes of another program.

Furthermore, for example, a plurality of technologies related to the present technology can be implemented independently as a single entity as long as there is no contradiction. It goes without saying that any plurality of present technologies can be implemented in combination. For example, a part or all of the present technologies described in any of the embodiments can be implemented in combination with a part or all of the present technologies described in other embodiments. Furthermore, a part or all of any of the above-described present technologies can be implemented together with another technology that is not described above.

Note that the present technology can also have the following configurations.
(1) An image processing apparatus including:
   a region division unit configured to generate a partial region by dividing an entire region of an image; and
   a comparison unit configured to compare estimated 3D information with sensor 3D information with use of the partial region, in which
   the estimated 3D information is 3D information estimated on the basis of the image, and
   the sensor 3D information is 3D information acquired by a sensor and associated with the image.
(2) The image processing apparatus according to (1), in which
   the region division unit detects an object that is main and is to be a subject in the image, and divides the entire region on the basis of a detection result.
(3) The image processing apparatus according to (2), in which
   the region division unit generates an object region that is the partial region including the object that has been detected, and a non-object region that is the partial region not including the object.
(4) The image processing apparatus according to (2) or (3), in which
   the region division unit detects the object by performing pattern analysis in the image.
(5) The image processing apparatus according to (2) or (3), in which
   the region division unit detects the object with use of a neural network that is input with the image and outputs a detection result of the object.
(6) The image processing apparatus according to (1), in which
   the region division unit divides the entire region by clustering the estimated 3D information.
(7) The image processing apparatus according to (6), in which
   the region division unit divides the entire region with use of a neural network that is input with the estimated 3D information and outputs a result of the clustering.
(8) The image processing apparatus according to (7), in which
   by inputting the estimated 3D information to the neural network, the region division unit generates an object region that is the partial region including an object that is main and is to be a subject in the image, and a non-object region that is the partial region not including the object.
(9) The image processing apparatus according to any one of (1) to (8), in which
   the comparison unit compares the sensor 3D information and the estimated 3D information for each of the partial regions.
(10) The image processing apparatus according to (9), in which
   the comparison unit compares the sensor 3D information and the estimated 3D information for all the partial regions generated by the region division unit.
(11) The image processing apparatus according to (9), in which
   the comparison unit compares the sensor 3D information and the estimated 3D information for an object region that is the partial region including an object that is main and is to be a subject in the image.
(12) The image processing apparatus according to (9), in which
   the comparison unit compares the sensor 3D information and the estimated 3D information for a non-object region that is the partial region not including an object that is main and is to be a subject in the image.
(13) The image processing apparatus according to any one of (1) to (12), in which
   the comparison unit
   derives a first relative positional relationship between the partial regions by comparing the sensor 3D information between the partial regions,
   derives a second relative positional relationship between the partial regions by comparing the estimated 3D information between the partial regions, and
   compares the first relative positional relationship with the second relative positional relationship.
(14) The image processing apparatus according to any one of (1) to (13), in which
   the comparison unit compares a difference between the 3D information of the partial region and the 3D information of a region surrounding the partial region, between the estimated 3D information and the sensor 3D information.
(15) The image processing apparatus according to (14), in which
   the comparison unit compares a difference between the 3D information of an object region and the 3D information of a region surrounding the object region, the object region being the partial region including an object that is main and is to be a subject in the image.
(16) The image processing apparatus according to any one of (1) to (15), in which
   the comparison unit compares the estimated 3D information and the sensor 3D information by using a plurality of techniques.
(17) The image processing apparatus according to (16), in which
   the comparison unit selects any of a plurality of obtained comparison results.
(18) The image processing apparatus according to (16), in which
   the comparison unit combines a plurality of obtained comparison results.
(19) The image processing apparatus according to any one of (1) to (18), further including:
   a presentation processing unit configured to generate presentation information indicating a determination result of authenticity of the partial region of the image or a determination result of authenticity of the entire image, on the basis of a comparison result obtained with use of the partial region between the estimated 3D information and the sensor 3D information.
(20) The image processing apparatus according to (19), in which
   the presentation information includes at least either of visual information or auditory information.
(21) The image processing apparatus according to (19) or (20), in which
   in a case where the authenticity is suspicious on the basis of the comparison result, the presentation processing unit generates the presentation information including a warning indicating suspicion of the authenticity.
(22) The image processing apparatus according to any one of (19) to (21), in which
   in a case where the authenticity is suspicious on the basis of the comparison result, the presentation processing unit generates the presentation information clearly indicating a region for which the authenticity is suspicious.
(23) The image processing apparatus according to any one of (19) to (22), in which
   the presentation processing unit generates the presentation information clearly indicating an object region that is the partial region including an object that is main and is to be a subject in the image.
(24) The image processing apparatus according to any one of (19) to (23), in which
   in a case where the image is a moving image,
   the region division unit divides the entire region for every frame and generates the partial region,
   the comparison unit compares the estimated 3D information and the sensor 3D information with use of the partial region for the every frame, and
   the presentation processing unit generates the presentation information on the basis of the comparison result for the every frame.
(25) The image processing apparatus according to (24), in which
   the presentation processing unit generates the presentation information indicating a range in a time direction in which a region for which the authenticity is suspicious is present in the moving image.
(26) The image processing apparatus according to (24) or (25), in which
   the presentation processing unit generates a reduced image of a frame in which a region for which the authenticity is suspicious is present.
(27) The image processing apparatus according to any one of (19) to (26), further including:
   a presentation unit configured to present the presentation information.
(28) The image processing apparatus according to (19) to (27), in which
   the presentation processing unit confirms validity of an electronic signature corresponding to the image, and indicates a confirmation result in the presentation information.
(29) The image processing apparatus according to any one of (1) to (28), further including:
   an estimation unit configured to estimate the 3D information corresponding to the image on the basis of the image, and generate the estimated 3D information, in which
   the comparison unit compares the estimated 3D information generated by the estimation unit with the sensor 3D information.
(30) The image processing apparatus according to any one of (1) to (29), further including:
   a sensor 3D information acquisition unit configured to acquire the sensor 3D information corresponding to the image, in which
   the comparison unit compares the estimated 3D information with the sensor 3D information acquired by the sensor 3D information acquisition unit.
(31) The image processing apparatus according to any one of (1) to (30), further including:
   an image file acquisition unit configured to acquire the image and an image file storing the sensor 3D information corresponding to the image, in which
   the region division unit divides the entire region of the image stored in the image file, and the comparison unit compares the estimated 3D information with the sensor 3D information stored in the image file.
(32) The image processing apparatus according to (31), in which
   in a case where the image is a processed image obtained by processing an original image,
   the image file acquisition unit acquires the image file storing the original image,
   the region division unit generates the partial region corresponding to the processed image by dividing the entire region of the original image stored in the image file, and
   the comparison unit compares the sensor 3D information with the estimated 3D information of the partial region, the estimated 3D information being estimated on the basis of the original image.
(33) The image processing apparatus according to (32), in which
   the processed image is a cropped image obtained by cropping a part of the original image.
(34) An image processing method including:
   generating a partial region by dividing an entire region of an image; and
   comparing estimated 3D information with sensor 3D information with use of the partial region, in which
   the estimated 3D information is 3D information estimated on the basis of the image, and
   the sensor 3D information is 3D information acquired by a sensor and associated with the image.

### REFERENCE SIGNS LIST

- 100: Authenticity determination device
- 101: Control unit
- 111: Image analysis engine
- 112: Input/output interface unit
- 131: Image file acquisition unit
- 132: 3D information estimation unit
- 133: Region division unit
- 134: Sensor 3D information acquisition unit
- 135: Comparison unit
- 136: Presentation processing unit
- 151: Input unit
- 152: Presentation unit
- 153: Storage unit
- 154: Communication unit
- 155: Drive
- 400: Image processing system
- 401: Network
- 411: Authenticity determination server
- 412: Storage server
- 413: Imaging device
- 414: Terminal device
- 900: Computer

## Claims

1. An image processing apparatus comprising:
a region division unit configured to generate a partial region by dividing an entire region of an image; and
a comparison unit configured to compare estimated 3D information with sensor 3D information with use of the partial region, wherein
the estimated 3D information is 3D information estimated on a basis of the image, and
the sensor 3D information is 3D information acquired by a sensor and associated with the image.

2. The image processing apparatus according to claim 1, wherein
the region division unit detects an object that is main and is to be a subject in the image, and divides the entire region on a basis of a detection result.

3. The image processing apparatus according to claim 1, wherein
the region division unit divides the entire region by clustering the estimated 3D information.

4. The image processing apparatus according to claim 1, wherein
the comparison unit compares the sensor 3D information and the estimated 3D information for each of the partial regions.

5. The image processing apparatus according to claim 1, wherein
the comparison unit
derives a first relative positional relationship between the partial regions by comparing the sensor 3D information between the partial regions,
derives a second relative positional relationship between the partial regions by comparing the estimated 3D information between the partial regions, and
compares the first relative positional relationship with the second relative positional relationship.

6. The image processing apparatus according to claim 1, wherein
the comparison unit compares a difference between the 3D information of the partial region and the 3D information of a region surrounding the partial region, between the estimated 3D information and the sensor 3D information.

7. The image processing apparatus according to claim 1, wherein
the comparison unit compares the estimated 3D information and the sensor 3D information by using a plurality of techniques.

8. The image processing apparatus according to claim 1, further comprising:
a presentation processing unit configured to generate presentation information indicating a determination result of authenticity of the partial region of the image or a determination result of authenticity of the entire image, on a basis of a comparison result obtained with use of the partial region between the estimated 3D information and the sensor 3D information.

9. The image processing apparatus according to claim 8, wherein
the presentation information includes at least either of visual information or auditory information.

10. The image processing apparatus according to claim 8, wherein
in a case where the authenticity is suspicious on a basis of the comparison result, the presentation processing unit generates the presentation information including a warning indicating suspicion of the authenticity.

11. The image processing apparatus according to claim 8, wherein
in a case where the authenticity is suspicious on a basis of the comparison result, the presentation processing unit generates the presentation information clearly indicating a region for which the authenticity is suspicious.

12. The image processing apparatus according to claim 8, wherein
in a case where the image is a moving image,
the region division unit divides the entire region for every frame and generates the partial region,
the comparison unit compares the estimated 3D information and the sensor 3D information with use of the partial region for the every frame, and
the presentation processing unit generates the presentation information on a basis of the comparison result for the every frame.

13. The image processing apparatus according to claim 12, wherein
the presentation processing unit generates the presentation information indicating a range in a time direction in which a region for which the authenticity is suspicious is present in the moving image.

14. The image processing apparatus according to claim 12, wherein
the presentation processing unit generates a reduced image of a frame in which a region for which the authenticity is suspicious is present.

15. The image processing apparatus according to claim 8, further comprising:
a presentation unit configured to present the presentation information.

16. The image processing apparatus according to claim 8, wherein
the presentation processing unit confirms validity of an electronic signature corresponding to the image, and indicates a confirmation result in the presentation information.

17. The image processing apparatus according to claim 1, further comprising:
an estimation unit configured to estimate the 3D information corresponding to the image on a basis of the image, and generate the estimated 3D information, wherein
the comparison unit compares the estimated 3D information generated by the estimation unit with the sensor 3D information.

18. The image processing apparatus according to claim 1, further comprising:
a sensor 3D information acquisition unit configured to acquire the sensor 3D information corresponding to the image, wherein
the comparison unit compares the estimated 3D information with the sensor 3D information acquired by the sensor 3D information acquisition unit.

19. The image processing apparatus according to claim 1, further comprising:
an image file acquisition unit configured to acquire an original image and an image file storing the sensor 3D information corresponding to the original image, wherein
the region division unit generates the partial region corresponding to a processed image obtained by processing the original image by dividing the entire region of the original image stored in the image file, and
the comparison unit compares the sensor 3D information with the estimated 3D information of the partial region, the estimated 3D information being estimated on a basis of the original image.

20. An image processing method comprising:
generating a partial region by dividing an entire region of an image; and
comparing estimated 3D information with sensor 3D information with use of the partial region, wherein
the estimated 3D information is 3D information estimated on a basis of the image, and
the sensor 3D information is 3D information acquired by a sensor and associated with the image.
